# EUROPEAN PATENT APPLICATION

(11) **EP 2 368 620 A1**
(43) Date of publication of application: **28.09.2011**
(21) Application number: 11152224.9
(22) Date of filing: 26.01.2011
(51) Int. Cl.: B01D 46/24, F01N 3/022

(54) **Honeycomb structured body**

(30) Priority: 23.03.2010 WO PCT/JP2010/054955
(71) Applicant: IBIDEN CO., LTD., Ogaki-shi Gifu 503-8604 (JP)
(72) Inventor: Saito, Sho, Gifu 501-0695 (JP); Naruse, Kazuya, Gifu 501-0695 (JP); Shibata, Toshiaki, Gifu 501-0695 (JP)
(74) Representative: HOFFMANN EITLE

(57) **Abstract**

The honeycomb structured body of the present invention includes a ceramic block formed by combining a plurality of honeycomb fired bodies with an adhesive layer interposed between, the honeycomb fired bodies each having a large number of cells and surrounded by peripheral walls, the cells longitudinally placed in parallel with one another with a cell wall therebetween, wherein the honeycomb fired bodies of the ceramic block have different shapes, the honeycomb fired bodies include outer honeycomb fired bodies located in a peripheral part of the ceramic block and at least one inner honeycomb fired body located inward of the outer honeycomb fired bodies, at least one of the outer honeycomb fired bodies includes at least a curved part and a linear part in a part of a periphery which partially constitutes the periphery of the ceramic block, in a cross-section of the at least one of the outer honeycomb fired bodies perpendicular to the longitudinal direction, the linear part of each of the at least one of the outer honeycomb fired bodies is parallel to at least one of the adhesive layer between the outer honeycomb fired body and an adjacent inner honeycomb fired body, and the adhesive layer between the outer honeycomb fired body and an adjacent outer honeycomb fired body, and the linear part of each of the at least one of the outer honeycomb fired bodies has a length of 5 to 20 mm.

## Description

### TECHNICAL FIELD

The present invention relates to a honeycomb structured body.

### BACKGROUND ART

Exhaust gas discharged from internal combustion engines of vehicles (e. g. buses, trucks), construction machines and the like contains particulate matter (hereinafter, also referred to as PM) such as soot, and other hazardous substances. In recent years, these substances have raised serious problems as contaminants harmful to the environment and the human body. In view of these problems, as honeycomb filters for purifying exhaust gas by capturing PM therein, various honeycomb structured bodies made of porous ceramics have been proposed.

As examples of conventional honeycomb structured bodies of this kind, there have been known honeycomb structured bodies including a ceramic block in which a plurality of honeycomb fired bodies having a large number of cells are combined together.
Patent Document 1 discloses a honeycomb structured body including a ceramic block in which a plurality of honeycomb fired bodies of different shapes are combined together.

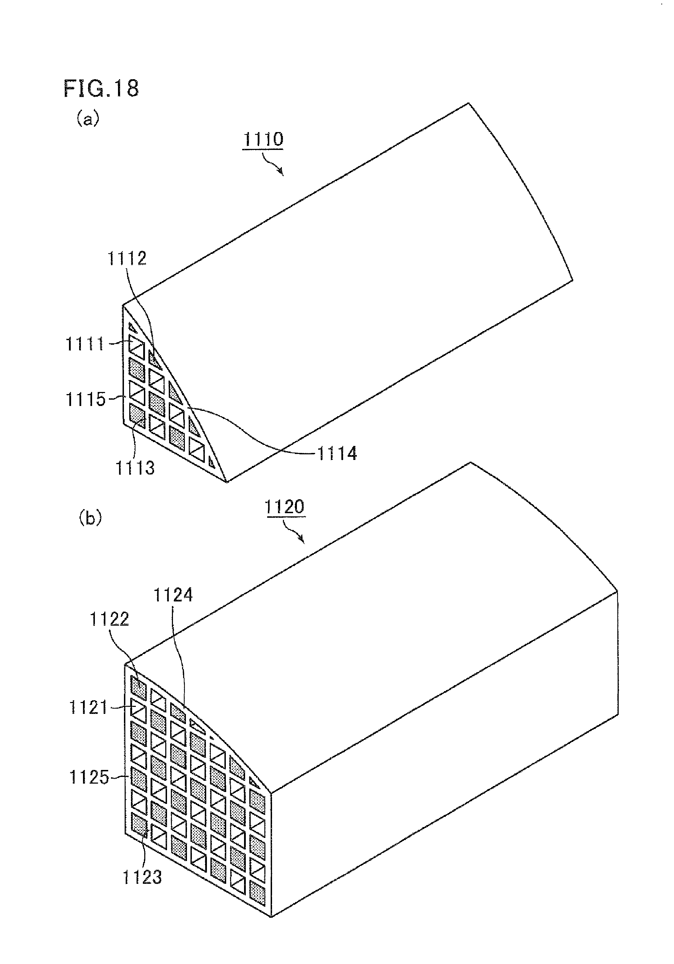

Figs. 18(a) and 18(b) are perspective views each schematically illustrating one example of a honeycomb fired body located outermost in a conventional honeycomb structured body including a ceramic block in which a plurality of honeycomb fired bodies of different shapes are combined together, among the honeycomb fired bodies constituting the honeycomb structured body.
In the honeycomb fired bodies 1110 and 1120 illustrated in Figs. 18 (a) and 18(b), a large number of cells 1111 and 1112, and 1121 and 1122 are placed in parallel with one another along the longitudinal direction of the honeycomb fired bodies. The cells 1111 and 1121 are separated by cell walls 1113 and 1123, respectively, and the cells 1111 and 1121 are surrounded by peripheral walls 1115 and 1125, respectively.

Among the large number of cells 1111 and 1112, and 1121 and 1122, the cells 1112 and 1122, which are closest to peripheral walls 1114 and 1124 partially constituting the periphery of the ceramic block, differ from the cells located inward of these cells in the shape of the cross-section perpendicular to the longitudinal direction (hereinafter, also simply referred to as "cross-sectional shape") . Specifically, the cells 1112 and 1122 have a substantially triangular cross-section or a substantially trapezoidal cross-section, and one of sides defining the cross-section of each of the cells 1112 and 1122 is along the peripheral walls 1114 and 1124.
The peripheral walls 1114 and 1124, which partially constitute the periphery of the ceramic block, are curved.

Patent Document 1: JP-A 2004-154718

### SUMMARY OF THE INVENTION PROBLEMS TO BE SOLVED BY THE INVENTION

A honeycomb structured body including a ceramic block in which a plurality of honeycomb fired bodies of different shapes are combined together can be manufactured as follows:
preparing a wet mixture for molding by mixing ceramic powder, water, and the like;
forming honeycomb molded bodies of difference shapes by extrusion-molding this wet mixture;
drying the obtained honeycomb molded bodies by a drying apparatus;
forming honeycomb fired bodies by firing the dried honeycomb molded bodies;
forming an aggregated body of a plurality of the honeycomb fired bodies by adhering the side faces of the honeycomb fired bodies with an adhesive paste interposed therebetween;
forming a ceramic block by drying and solidifying the adhesive paste into an adhesive layer; and
optionally forming a coat layer on the periphery of the ceramic block.

For combining a plurality of honeycomb fired bodies to form a ceramic block, it is necessary to hold each honeycomb fired body by being sandwiched by a device or jig at its side faces.
In the conventional honeycomb structured body disclosed in Patent Document 1, a peripheral wall constituting the periphery of the ceramic block, among peripheral walls of each honeycomb fired body, is curved.
Conventionally, honeycomb fired bodies located outermost in such a honeycomb structured body, especially honeycomb fired bodies with a curved face as illustrated in Fig. 18(a) have a problem that it is difficult to hold these honeycomb fired bodies. Another problem is that, when these honeycomb fired bodies with a curved face are held by force, fractures, cracks and the like are likely to occur at the held sites of the honeycomb fired bodies. These problems will result in lower manufacturing efficiency of the honeycomb structured body.

The present invention aims to solve the above-mentioned problems, and an object of the present invention is to provide a honeycomb structured body that includes honeycomb fired bodies that can be easily held, tends not to have defects such as fractures and cracks, and can be manufactured with high manufacturing efficiency.

### MEANS FOR SOLVING THE PROBLEMS

In order to achieve the above-mentioned object, a honeycomb structured body according to claim 1 includes:
a ceramic block formed by combining a plurality of honeycomb fired bodies with an adhesive layer interposed between, the honeycomb fired bodies each having a large number of cells and defined by peripheral walls, the cells longitudinally placed in parallel with one another with a cell wall therebetween,
   wherein
the honeycomb fired bodies of the ceramic block have different shapes,
the honeycomb fired bodies include outer honeycomb fired bodies located in a peripheral part of the ceramic block and at least one inner honeycomb fired body located inward of the outer honeycomb fired bodies,
at least one of the outer honeycomb fired bodies includes at least a curved part and a linear part in a part of a periphery which partially constitutes a periphery of the ceramic block, in a cross-section of the at least one of the outer honeycomb fired bodies perpendicular to the longitudinal direction,
the linear part of each of the at least one of the outer honeycomb fired bodies is parallel to at least one of the adhesive layer between the outer honeycomb fired body and an adjacent inner honeycomb fired body, and the adhesive layer between the outer honeycomb fired body and an adjacent outer honeycomb fired body, and
the linear part of each of the at least one of the outer honeycomb fired bodies has a length of 5 to 20 mm.

In the honeycomb structured body according to claim 1, at least one of the outer honeycomb fired bodies includes at least a curved part and a linear part in a part of a periphery which partially constitutes the periphery of the ceramic block, in a cross-section of the at least one of the outer honeycomb fired bodies perpendicular to the longitudinal direction (hereinafter, the cross-section of the part partially constituting the periphery of the ceramic block is simply referred to as "peripheral cross-section".) The linear part of each of the at least one of the outer honeycomb fired bodies is parallel to at least one of the adhesive layer between the outer honeycomb fired body and an adjacent inner honeycomb fired body, and the adhesive layer between the outer honeycomb fired body and an adjacent outer honeycomb fired body.
The linear part in the periphery of the at least one outer honeycomb fired body facilitates holding the outer honeycomb fired body by sandwiching the outer honeycomb fired body at its side faces when a plurality of outer honeycomb fired bodies are combined together. Therefore, it is possible to prevent defects such as fractures and cracks that occur at the held sites of the outer honeycomb fired bodies, and fractures and cracks that occur when a jig or the like contacts the outer honeycomb fired bodies. Consequently, since the frequency of defects of the honeycomb structured body can be reduced, the manufacturing efficiency of the honeycomb structured body can be improved.

In the honeycomb structured body according to claim 1, the linear part of each of the at least one of the outer honeycomb fired bodies has a length of 5 to 20 mm. With a length in this range, the linear part of the at least one outer honeycomb fired body enables the outer honeycomb fired body to be held in a suitable manner.
If the length of the linear part of the at least one outer honeycomb fired body is less than 5 mm, the linear part will hardly provide the preventive effect against defects such as fractures and cracks. If the length of the linear part of the at least one outer honeycomb fired body is more than 20 mm, the shape of the honeycomb structured body will be widely different from that of the conventional honeycomb structured bodies. With such a shape, the honeycomb structured body will be poor in properties as a honeycomb structured body such as pressure loss and PM capturing efficiency and therefore cannot be practically used.

In the honeycomb structured body according to claim 1, at least one of the outer honeycomb fired bodies includes at least a curved part in the part of the periphery which partially constitutes the periphery of the ceramic block, in the cross-section of the at least one of the outer honeycomb fired bodies perpendicular to the longitudinal direction.
If the outer honeycomb fired bodies are designed to have a peripheral cross-section defined only by linear parts, the outer honeycomb fired bodies have a lot of steps formed by a projection and a recess in the periphery. A disadvantage of such outer honeycomb fired bodies having steps is that defects such as fractures at the projections of the steps and cracks at the recesses of the steps are likely to occur when these outer honeycomb fired bodies are, for example, held or transported using a jig or the like.
On the other hand, the honeycomb structured body that includes the outer honeycomb fired body (bodies) having a curved part in the cross-section can reduce the frequency of defects such as fractures at the projections of steps and cracks at the recesses of the steps, compared to honeycomb structured bodies that include only outer honeycomb fired bodies with no curved part in the cross-section.

The term "cell wall" of a honeycomb fired body used herein refers to a structural part between two cells, that is, a structural part separating two cells. The term "peripheral wall" of a honeycomb fired body used herein refers to a part of the structure that surrounds the honeycomb fired body and constitutes the periphery of the honeycomb fired body.

In the honeycomb structured body according to claim 2, the linear part of each of the at least one of the outer honeycomb fired bodies is formed by a part of a peripheral wall, the part being in contact with 5 to 10 adjacent cells.
If the linear part of the at least one outer honeycomb fired body is formed by a part of the peripheral wall which is in contact with less than 5 adjacent cells, the length of the linear part may be insufficient. Therefore, the linear part may fail to enable the outer honeycomb fired body to be held in a suitable manner. On the other hand, if the liner part of the at least one outer honeycomb fired body is formed by a part of the peripheral wall which is in contact with more than 10 adjacent cells, the shape of the honeycomb structured body will be widely different from that of the conventional honeycomb structured bodies. With such a shape, the honeycomb structured body will be poor in properties as a honeycomb structured body such as pressure loss and PM capturing efficiency and therefore cannot be practically used.

In the honeycomb structured body according to claim 3, the linear part of each of the at least one of the outer honeycomb fired bodies is located in an end portion of the part of the periphery of the outer honeycomb fired body which partially constitutes the periphery of the ceramic block.
When the linear part of each of the at least one outer honeycomb fired bodies is located in an end portion of the part of the periphery of the outer honeycomb fired body which partially constitutes the periphery of the ceramic block, the outer honeycomb fired body can be easily held.

In the honeycomb structured body according to claim 4, the cells of each of the outer honeycomb fired bodies include peripheral cells in contact with any of the peripheral walls of the outer honeycomb fired body, and inner cells located inward of the peripheral cells,
the inner cells are complete cells formed in accordance with a basic formation pattern, and
each of peripheral cells that are in contact with the peripheral wall partially constituting the periphery of the ceramic block, among the peripheral cells, has a same shape as that of the inner cells in a cross-section perpendicular to the longitudinal direction.
In the case that the honeycomb structured body is used as an exhaust gas purifying filter, the cells of each honeycomb fired body are sealed with a plug material paste at either one end. When all the cells of the outer honeycomb fired bodies have the same cross-sectional shape, any sealing defects such as protrusion of plugs and unsealed cells will not occur, and the plug material paste can be easily filled into the cells. Consequently, the manufacturing efficiency of the honeycomb structured body can be improved.

In the honeycomb structured body according to claim 5, the cells of each of the outer honeycomb fired bodies include peripheral cells in contact with any of the peripheral walls of the outer honeycomb fired body, and inner cells located inward of the peripheral cells,
the inner cells are complete cells formed in accordance with a basic formation pattern, and
peripheral cells that are in contact with the peripheral wall partially constituting the periphery of the ceramic block, among the peripheral cells, include an incomplete cell that has a different shape from that of the inner cells in the cross-section perpendicular to the longitudinal direction.
In the case that the honeycomb structured body is designed to include an incomplete cell, as many cells as possible can be arranged. Therefore, when this honeycomb structured body is intended to be used as an exhaust gas purifying filter, the filtration area for capturing PM can be increased. Accordingly, the pressure loss of the honeycomb structured body can be suppressed to low levels.

In the honeycomb structured body according to claim 6, each of peripheral cells of the outer honeycomb fired bodies except the incomplete cell, the inner cells of the outer honeycomb fired bodies, and the cells of the inner honeycomb fired body is substantially quadrangular in a cross-section perpendicular to the longitudinal direction.

In the honeycomb structured body according to claim 7, the peripheral cells of each of the outer honeycomb fired bodies except the incomplete cell, the inner cells of each of the outer honeycomb fired bodies, and the cells of the inner honeycomb fired body each include large-volume cells and small-volume cells, and
a cross-sectional area of the large-volume cells perpendicular to the longitudinal direction is larger than a cross-sectional area of the small-volume cells perpendicular to the longitudinal direction.
The honeycomb structured body having the above-described structure can capture a larger amount of PM when used as an exhaust gas purifying filter.

In the honeycomb structured body according to claim 8, the cross-section of each of the large-volume cells perpendicular to the longitudinal direction is substantially quadrangular, and
the cross-section of each of the small-volume cells perpendicular to the longitudinal direction is substantially quadrangular.
In the honeycomb structured body according to claim 9, the cross-section of each of the large-volume cells perpendicular to the longitudinal direction is substantially octagonal, and
the cross-section of each of the small-volume cells perpendicular to the longitudinal direction is substantially quadrangular.
In the honeycomb structured body according to claim 10, all sides of the cross-section of each of the large-volume cells perpendicular to the longitudinal direction are curved, and
all sides of the cross-section of each of the small-volume cells perpendicular to the longitudinal direction are curved.
Since the cells of the honeycomb structured bodies according to claims 8 to 10 have the above-described cross-sectional shapes, these honeycomb structured bodies can suitably capture PM in exhaust gas when used as exhaust gas purifying filters.

In the honeycomb structured body according to claim 11, the peripheral walls of the outer honeycomb fired bodies are thicker than the cell walls of the outer honeycomb fired bodies, the peripheral walls of the inner honeycomb fired body, and the cell walls of the inner honeycomb fired body.
In other words, a part of the peripheral wall of the honeycomb structured body which constitutes the periphery of the ceramic block is thicker than the cell walls of the outer honeycomb fired bodies, the peripheral walls of the inner honeycomb fired body, and the cell walls of the inner honeycomb fired body. Accordingly, the strength of the peripheral walls of the outer honeycomb fired bodies is improved. Therefore, it is possible to more suitably prevent defects such as fractures and cracks from occurring when the outer honeycomb fired bodies are held or transferred using a jig or the like. With this structure, it is also possible to improve the strength of the honeycomb structured body as a whole.

In the honeycomb structured body according to claim 12, at least one of the outer honeycomb fired bodies includes an angled part in the periphery, and
the peripheral walls of the outer honeycomb fired bodies have a substantially uniform thickness except the angled part.
In other words, the part of the peripheral wall of the honeycomb structured body which constitutes the periphery of the ceramic block has a substantially uniform thickness except the angular part formed in the periphery of the honeycomb structured body. When a honeycomb fired body designed to have this structure is manufactured, it is possible to avoid distortion of cell walls of a honeycomb molded body through extrusion-molding. Therefore, it is possible to manufacture a honeycomb structured body with non-distorted cell walls. Thus, the frequency of molding defects of honeycomb molded bodies can be reduced, and hence the manufacturing efficiency of the honeycomb structured body can be improved.

In the honeycomb structured body according to claim 13, the cross-section of each of the outer honeycomb fired bodies perpendicular to the longitudinal direction has a substantially sector shape formed by three line segments and the part of the periphery which partially constitutes the periphery of the ceramic block, and
the cross-section of the inner honeycomb fired, body perpendicular to the longitudinal direction is substantially quadrangular.
In the case that the outer honeycomb fired bodies having the above shape and the inner honeycomb fired bodies having the above shape are used, the number of honeycomb fired bodies required to manufacture the conventional honeycomb structured body can be reduced compared to the number of honeycomb fired bodies required to manufacture the honeycomb structured body of Patent Document 1. Therefore, the honeycomb structured body having a predetermined shape can be easily manufactured, and hence the manufacturing efficiency of the honeycomb structured body can be further improved, which will lead to a reduction of the manufacturing costs of the honeycomb structured body.

In the honeycomb structured body according to claim 14, the cells of the outer honeycomb fired bodies and the inner honeycomb fired body are sealed at either one end such that the sealed ends are alternately arranged.

In the honeycomb structured body according to claim 15, a coat layer is formed on the periphery of the ceramic block.

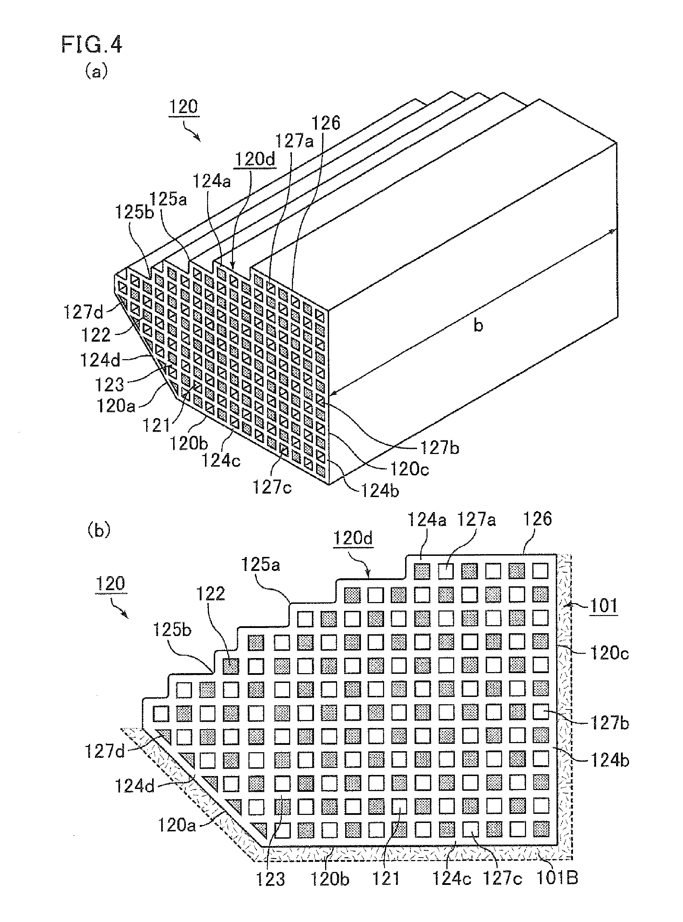

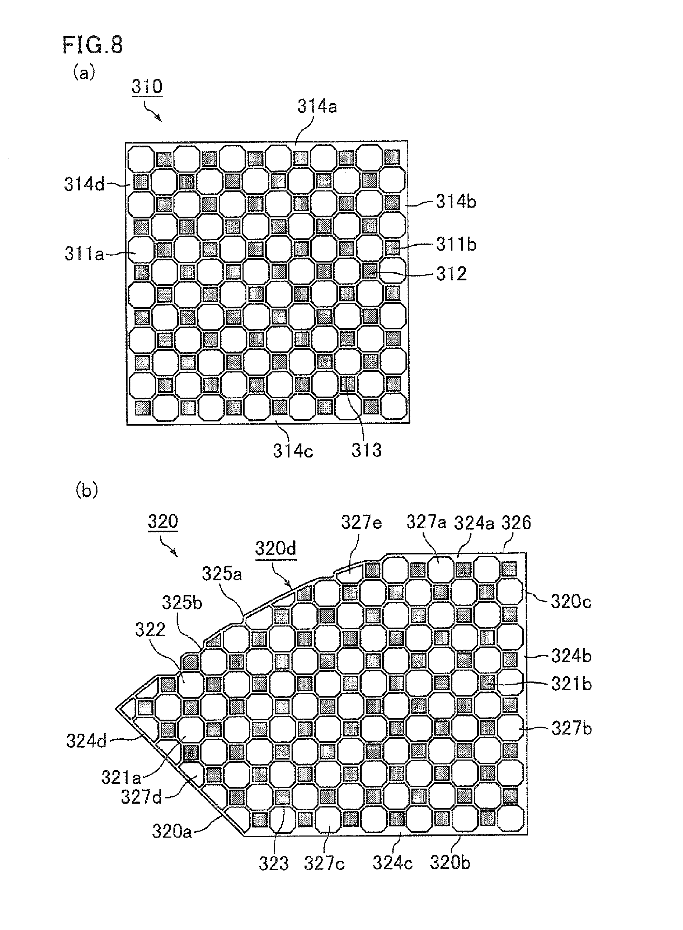

The term "complete cells" used herein refers to the minimum unit of cells arranged in a certain repeating pattern in the vertical and transverse directions when cells constituting a honeycomb fired body are viewed in the cross-section perpendicular to the longitudinal direction. These cells may all have a single shape or may have several different shapes. For example, substantially square shapes are repeatedly arranged in the cross-section perpendicular to the longitudinal direction of the outer honeycomb fired body 120 illustrated in Figs. 4 (a) and 4(b). In this case, the substantially square cells are complete cells. In the inner honeycomb fired body 310 illustrated in Fig. 8(a), two kinds of cells each having a different cell cross-sectional area are repeatedly arranged. In this case, both of the two kinds of cells each having a different cell cross-sectional area are referred to as complete cells. However, in some cases, one of the two kinds of cells each having a different cell cross-sectional area may be referred to as an incomplete cell for convenience.
The term "basic formation pattern" used herein means the shape of the complete cells.

The term "incomplete cell" used herein refers to one kind of peripheral cells that are in contact with any of the peripheral walls of each outer honeycomb fired body, and specifically refers to a cell whose shape is partially lacking compared to the shape of the complete cells when the cells constituting the outer honeycomb fired body are viewed in the cross-section perpendicular to the longitudinal direction. The cell cross-sectional area of the incomplete cell is smaller than that of the complete cells. In the case that all the complete cells have the same shape, cells having a smaller cross-sectional area than that of the complete cells are referred to as incomplete cells. In an outer honeycomb fired body in which a combination of two or more kinds of complete cells having a different cross-sectional area is repeatedly arranged, for example, cells having a smaller cell cross-sectional area than that of cells having a relatively larger cell cross-sectional area are referred to as incomplete cells, or cells having a smaller cross-sectional area than that of the cells having a relatively smaller cell cross-sectional area are referred to as incomplete cells.

### BRIEF DESCRIPTION OF THE DRAWINGS

Fig. 1 is a perspective view schematically illustrating one example of a honeycomb structured body according to a first embodiment of the present invention;
Fig. 2 is an A-A line cross-sectional view of the honeycomb structured body illustrated in Fig. 1;
Fig. 3(a) is a perspective view schematically illustrating one example of an inner honeycomb fired body in the honeycomb structured body according to the first embodiment of the present invention, and Fig. 3(b) is a B-B line cross-sectional view of the inner honeycomb fired body illustrated in Fig. 3(a);
Fig. 4(a) is a perspective view schematically illustrating one example of an outer honeycomb fired body in the honeycomb structured body according to the first embodiment of the present invention, and Fig. 4(b) is a side view of the outer honeycomb fired body illustrated in Fig. 4(a);
Fig. 5 is a side view schematically illustrating a part surrounding a linear part of the outer honeycomb fired body illustrated in Figs. 4(a) and 4(b);
Fig. 6(a) is a perspective view schematically illustrating another example of the outer honeycomb fired body in the honeycomb structured body according to the first embodiment of the present invention, and Fig. 6(b) is a side view of the outer honeycomb fired body illustrated in Fig. 6 (a) ;
Fig. 7(a) is a perspective view schematically illustrating one example of an outer honeycomb fired body in a honeycomb structured body according to a second embodiment of the present invention, and Fig. 7 (b) is a side view of the outer honeycomb fired body illustrated in Fig. 7(a);
Fig. 8 (a) is a side view schematically illustrating one example of an inner honeycomb fired body in a honeycomb structured body according to a third embodiment of the present invention, and Fig. 8(b) is a side view schematically illustrating one example of an outer honeycomb fired body in the honeycomb structured body according to the third embodiment of the present invention;
Fig. 9(a) is a side view schematically illustrating another example of the inner honeycomb fired body in the honeycomb structured body according to the third embodiment of the present invention, and Fig. 9(b) is a side view schematically illustrating another example of the outer honeycomb fired body in the honeycomb structured body according to the third embodiment of the present invention;
Fig. 10 is a side view schematically illustrating one example of a honeycomb structured body according to a fourth embodiment of the present invention;
Figs. 11(a) and 11(b) are side views each schematically illustrating one example of an outer honeycomb fired body in the honeycomb structured body according to the fourth embodiment of the present invention;
Fig. 12 is a side view schematically illustrating one example of a honeycomb structured body according to a fifth embodiment of the present invention;
Figs. 13(a) and 13(b) are side views each schematically illustrating one example of an outer honeycomb fired body in the honeycomb structured body according to the fifth embodiment of the present invention;
Fig. 14 is a side view schematically illustrating one example of a honeycomb structured body according to another embodiment of the present invention;
Fig. 15 is a side view schematically illustrating one example of an outer honeycomb fired body of the honeycomb structured body according to another embodiment of the present invention;
Figs. 16(a) and 16(b) are side views each schematically illustrating one example of a method for holding an outer honeycomb fired body in a honeycomb structured body according to an embodiment of the present invention;
Figs. 17(a) and 17(b) are side views each schematically illustrating one example of an end face of an inner honeycomb fired body in a honeycomb structured body according to a still another embodiment of the present invention; and
Figs. 18(a) and 18(b) are perspective views each schematically illustrating one example of a honeycomb fired body located outermost in a conventional honeycomb structured body including a ceramic block in which a plurality of honeycomb fired bodies of different shapes are combined together, among the honeycomb fired bodies.

### MODE FOR CARRYING OUT THE INVENTION

### (First Embodiment)

Hereinafter, the first embodiment, which is one embodiment of the honeycomb structured body of the present invention, is described referring to the figures.

In the following, in the case that it is not particularly necessary to distinguish an outer honeycomb fired body and an inner honeycomb fired body, each of them is simply referred to as a "honeycomb fired body". In the case that it is not particularly necessary to distinguish the peripheral cells and the inner cells, and the complete cells and the incomplete cells, all of them are simply referred to as "cells".
The terms "cross-section of the honeycomb structured body", "cross-section of a honeycomb fired body", and "cross-section of a honeycomb molded body" used herein mean the cross-section of the honeycomb structured body perpendicular to the longitudinal direction, the cross-section of the honeycomb fired body perpendicular to the longitudinal direction, and the cross-section of the honeycomb molded body perpendicular to the longitudinal direction, respectively.
The term "cross-seotional area of a honeycomb fired body" used herein means the area of the cross-section of the honeycomb fired body perpendicular to the longitudinal direction of the honeycomb fired body.

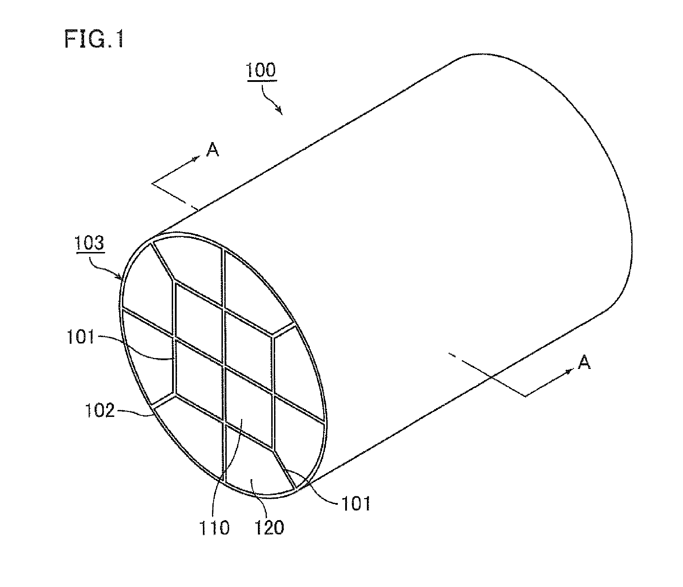

Fig. 1 is a perspective view schematically illustrating one example of a honeycomb structured body according to a first embodiment of the present invention.

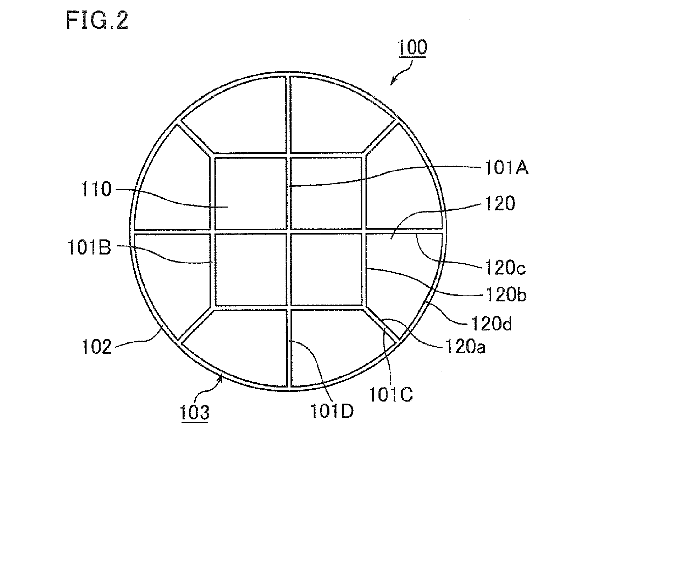

Fig. 2 is an A-A line cross-sectional view of the honeycomb structured body illustrated in Fig. 1.

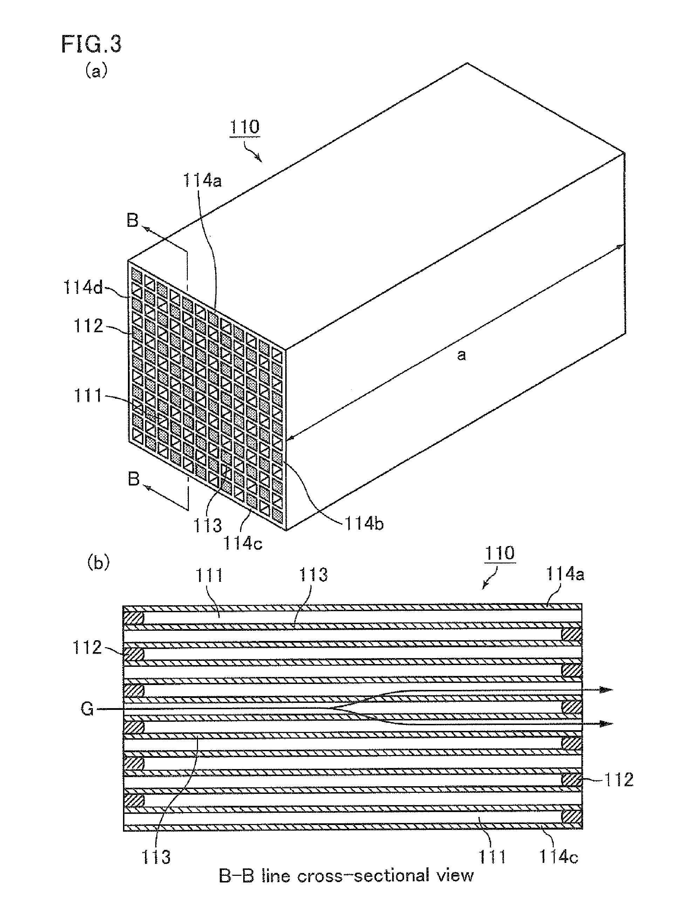

Fig. 3(a) is a perspective view schematically illustrating one example of an inner honeycomb fired body in the honeycomb structured body according to the first embodiment of the present invention, and Fig. 3(b) is a B-B line cross-sectional view of the inner honeycomb fired body illustrated in Fig. 3(a).
Fig. 4(a) is a perspective view schematically illustrating one example of an outer honeycomb fired body in the honeycomb structured body according to the first embodiment of the present invention, and Fig. 4 (b) is a side view of the outer honeycomb fired body illustrated in Fig. 4(a).

The honeycomb structured body 100 illustrated in Figs. 1 and 2 includes a ceramic block 103 in which four inner honeycomb fired bodies 110 having a shape as illustrated in Figs. 3(a) and 3(b) and eight outer honeycomb fired bodies 120 having a shape as illustrated in Figs. 4(a) and 4(b) are combined together with an adhesive layer 101 (101A to 101D) interposed therebetween. On the periphery of the ceramic coat block 103, a coat layer 102 is formed. It should be noted that the formation of a coat layer is optional.

The outer honeycomb fired bodies 120 have steps formed by a projection and a recess, as described later. Therefore, the ceramic block 103 also has steps on the peripheral surface. The coat layer 102 on the periphery of the ceramic block 103 is formed to fill the recesses of the steps.

In the cross-section of the honeycomb structured body 100, as illustrated in Fig. 2, the adhesive layers 101C and 101D combine the outer honeycomb fired bodies 120 together. The adhesive layers 101C each extend in the direction toward the periphery of the honeycomb structured body 100 from a corner of one inner honeycomb fired body 110, and the adhesive layers 101D each extend in the direction toward the periphery of the honeycomb structured body 100 from the boundary between two adjacent inner honeycomb fired bodies 110. The adhesive layers 101C and 101D form a predetermined angle (for example, 45°).

As illustrated in Fig. 2, the inner honeycomb fired bodies 110 are substantially quadrangular units each having a substantially quadrangular (substantially square) cross-section.
As illustrated in Fig. 2, the outer honeycomb fired bodies 120 are substantially sector-shaped units each having a cross-section defined by three line segments 120a, 120b and 120c and one substantial arc 120d.
The two angles formed by two of the three line segments, (the angle formed by the line segments 120b and 120c and the angle formed by the line segments 120a and 120b) are 90° and 135°. The substantial arc 120d constitutes a part of the periphery of the honeycomb structured body 100. The shape of the substantial arc will be described later.

Hereinafter, the inner honeycomb fired bodies and the outer honeycomb fired bodies constituting the honeycomb structured body according to the first embodiment of the present invention are described.
First, the inner honeycomb fired bodies are described.
The inner honeycomb fired body 110 illustrated in Figs. 3(a) and 3(b) includes a large number of cells 111 which are placed along the longitudinal direction (the direction of the arrow "a" in Fig. 3 (a)) in parallel with one another with a cell wall 113 interposed therebetween. The inner honeycomb fired body 110 is surrounded by peripheral walls 114a to 114d. Each of the cells 111 is sealed at either one end with a plug 112.

Therefore, exhaust gas G ("G" represents exhaust gas and the arrow represents the flow direction of the exhaust gas in Fig. 3 (b)) enters cells 111 open at one end and exits from other cells 111 open at the other end inevitably through the cell walls 113 separating these cells 111. PM and the like in the exhaust gas G are captured in the cell walls 113 when the exhaust gas G passes through the cell walls 113. Thus, the cell walls 113 serve as filters.

All the cells 111 of the inner honeycomb fired body 110 are substantially quadrangular (substantially square) in the cross-section perpendicular to the longitudinal direction, and have the same cross-sectional area. The cells 111 are formed at equal intervals.

Next, the outer honeycomb fired bodies are described.
Like the inner honeycomb fired bodies, the outer honeycomb fired body 120 illustrated in Figs. 4(a) and 4(b) includes a large number of cells 121 and 127a to 127d which are placed along the longitudinal direction (the direction of the arrow "b" in Fig. 4 (a)) in parallel with one another with a cell wall 123 interposed therebetween. The outer honeycomb fired body 120 is surrounded by peripheral walls 124a to 124d. Each of the cells 121 and 127a to 127d is sealed at either one end with a plug 122.
Therefore, for example, exhaust gas enters cells 121 open at one end and exits from other cells 121 open at the other end inevitably through the cell walls 123 separating these cells 121. Thus, the cell walls 123 serve as filters. Accordingly, although the outer honeycomb fired body 120 and the inner honeycomb fired body 110 differ in the external appearance shape, both of them have the same filtering function.

The cells 121 and 127a to 127d of the outer honeycomb fired body 120 include peripheral cells 127a to 127d in contact with any of the peripheral walls 124a to 124d, and inner cells 121 located inward of the peripheral cells 127a to 127d.

The inner cells 121 are formed in a lattice pattern, which is a basic formation pattern. All of the inner cells 121 have the same substantially quadrangular (substantially square) cross-section, and have the same cross-sectional area. Since the inner cells 121 are formed in accordance with the basic formation pattern, all the inner cells 121 are complete cells.

The peripheral cells 127a that are in contact with the peripheral wall 124a partially constituting the periphery of the honeycomb structured body (ceramic block), among the peripheral cells 127a to 127d, have the same cross-sectional shape as that of the inner cells 121. The peripheral cells 127b that are in contact with the peripheral wall 124b, and the peripheral cells 127c that are in contact with the peripheral wall 124c also have the same cross-sectional shape as that of the inner cells 121.
In other words, these peripheral cells 127a to 127c are complete cells. The peripheral cells 127a to 127c should be considered as complete cells because they are formed in the basic formation pattern like the inner cells 121 although they are in contact with the peripheral walls 124a to 124c.
On the other hand, the peripheral cells 127d that are in contact with the peripheral wall 124d have a different cross-sectional shape from that of the inner cells 121, which are complete cells, and are regarded as incomplete cells.
Cells that are not formed in accordance with the basic formation pattern, that is, cells whose cross-section perpendicular to the longitudinal direction is smaller than the substantially quadrangular (substantially square) cross-section of the inner cells formed in the basic formation pattern are referred to as incomplete cells.

As described above, the part of the periphery of each outer honeycomb fired body which partially constitutes the periphery of the honeycomb structured body has a substantially arc shape in the cross-section perpendicular to the longitudinal direction.
Specifically, each of the outer honeycomb fired bodies includes at least a curved part and a linear part in the part of the periphery of the outer honeycomb fired body which partially constitutes the periphery of the honeycomb structured body (ceramic block) , in the cross-section perpendicular to the longitudinal direction.
The outer honeycomb fired body 120 illustrated as an example in Figs. 4(a) and 4(b) includes curved parts 125a and 125b, and a linear part 126 in a peripheral part 120d, in the periphery 120a to 120d, which partially constitutes the periphery of the honeycomb structured body (ceramic block) in the cross-section.

First, the linear part of the outer honeycomb fired bodies is described.
In the present embodiment, the linear part of each outer honeycomb fired body is parallel to at least one of the adhesive layer between the outer honeycomb fired body and an adjacent inner honeycomb fired body and the adhesive layer between the outer honeycomb fired body and an adjacent outer honeycomb fired body.
In the outer honeycomb fired body 120 illustrated in Figs. 4(a) and 4(b), the linear part 126 constitutes a part of the peripheral part 120d and is formed by a part of the peripheral wall 124a. The part of the peripheral wall 124a is in contact with 6 adjacent cells 121. The linear part 126 is formed at an end portion of the peripheral part 120d constituting the periphery of the ceramic block.
The linear part 126, which is a part of the peripheral part 120d of the outer honeycomb fired body 120, is parallel to the facing peripheral part 120b. As illustrated in Fig. 2, the peripheral part 120b of the outer honeycomb fired body 120 is bonded to an inner honeycomb fired body 110 with an adhesive layer 101B interposed therebetween. In this structure, the linear part 126 of the outer honeycomb fired body 120 is parallel to the adhesive layer between the inner honeycomb fired body and this outer honeycomb fired body.

The term "linear part" of an outer honeycomb fired body used herein does not strictly mean a part of the periphery whose cross-section is a completely straight line, but means a part whose cross-section can be considered to be substantially linear. The term "parallel" used herein does not strictly mean only the mathematical parallel relationship, and is intended to indicate relationships which can be considered to be substantially the same as the "parallel" relationship.

In the present embodiment, the length of the linear part of each outer honeycomb fired body is preferably 5 to 20 mm. Preferably, the length of the linear part of each outer honeycomb fired body is substantially the same as the total length of the 5 to 10 cells.
In the context of the present description, the length of the cells is defined as follows.

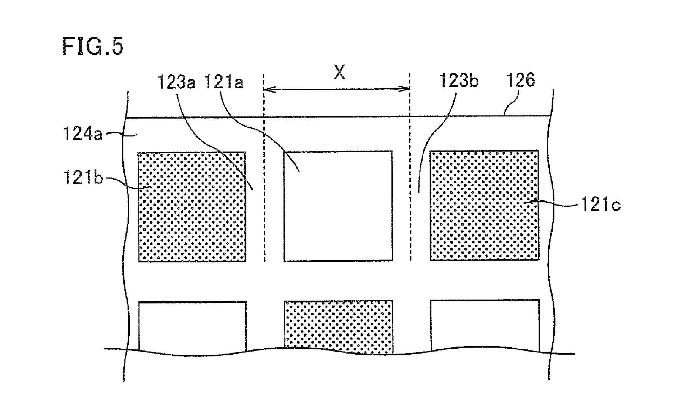

Fig. 5 is a side view schematically illustrating a part surrounding the linear part of the outer honeycomb fired body illustrated in Figs. 4(a) and 4(b).
The length of the cell 121a is the distance from a line equally dividing the thickness of the cell wall 123a separating the cells 121a and 121b to a line equally dividing the thickness of the cell wall 123b separating the cells 121a and 123c (the length of the arrow "X" in Fig. 5).

Next, the curved part of each outer honeycomb fired body is described.
In the outer honeycomb fired body 120 illustrated in Figs. 4 (a) and 4(b), the peripheral wall 124a has steps formed by a projection 125a and a recess 125b at positions in accordance with the arrangement of the peripheral cells 127a. The cross-section of each of the projections 125a and the recesses 125b has a shape with a chamfered part. In the outer honeycomb fired body 120, the chamfered parts, that is, the projections 125a and the recesses 125b correspond to curved parts of the outer honeycomb fired body 120.
Each of the corners is preferably R-chamfered, that is, is preferably curved in the cross-section.
The curvature radius of the R-chatmfered (round) corners is preferably 0.3 to 2.5 mm. When the curvature radius of the R-chamfered (round) corners is in this range, the outer honeycomb fired body is less likely to have damage such as fractures caused when the outer honeycomb fired body contacts a jig or the like, and the strength of the cell walls of the outer honeycomb fired body tends to be higher.
The curvature radius of the R-chamfered (round) corners means the radius of the arc of the R-chamfered (round) corners.

In the outer honeycomb fired body 120 illustrated in Figs. 4 (a) and 4 (b) , the projections 125a and the recesses 125b, which are curved parts, may be considered as angled parts. In this case, the honeycomb structured body is considered to have the angled parts in its periphery. The thickness of the entire peripheral wall 124a except the angled parts (the thickness of the entire peripheral wall of the honeycomb structured body except the angled parts) is substantially uniform. The thickness of the peripheral wall 124a except the angled parts is substantially the same as the thickness of the cell walls 123 and the thickness of the other peripheral walls 124b to 124d.

In the context of the present description, the term "chamfered" used for projections formed in a peripheral wall of an outer honeycomb fired body is intended to indicate a shape of the projections in which it is as if the projected angled parts of the peripheral wall are cut away when viewed in the cross-section.
On the other hand, the term "chamfered" used for recesses formed in a peripheral wall of an outer honeycomb fired body is intended to indicate a shape of the recesses in which, when viewed in the cross-section, the recessed angled parts of the peripheral wall have the same shape as that created by filling the angled parts of the peripheral wall as if the recessed angled parts of the peripheral wall are chamfered. For example, when the recessed angled parts in the peripheral wall of an outer honeycomb fired body have the same shape as that obtained by R-chamfering the peripheral wall, the recesses are considered to be R-chamfered (round) corners.

The curved parts of the outer honeycomb fired bodies are not limited to the projections and the recesses as illustrated in Figs. 4 (a) and 4 (b) , and, for example, may be those described below.

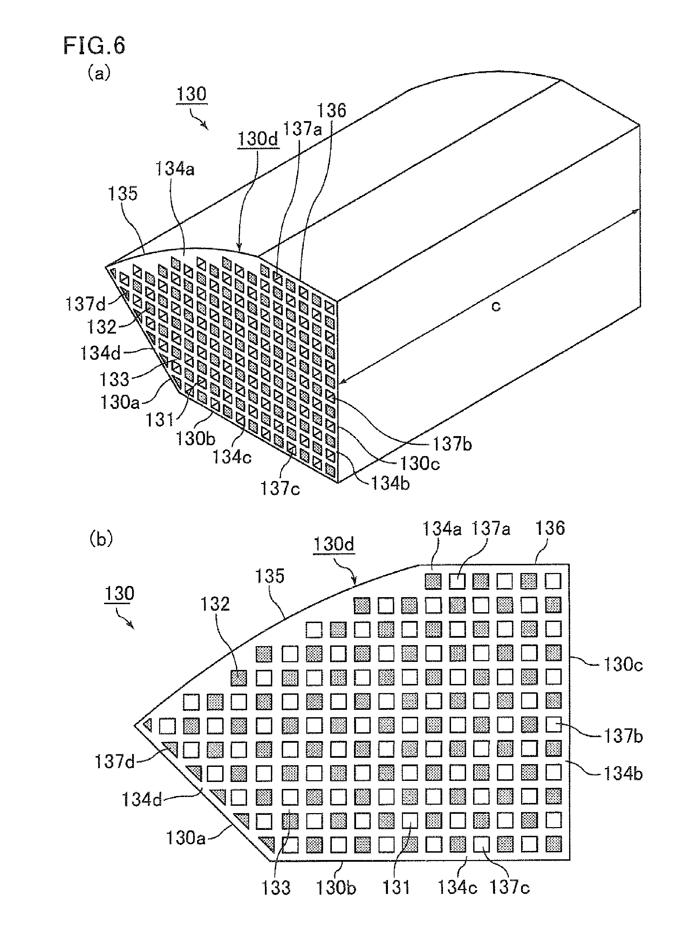

Fig. 6(a) is a perspective view schematically illustrating another example of the outer honeycomb fired body in the honeycomb structured body according to the first embodiment of the present invention, and Fig. 6(b) is a side view of the outer honeycomb fired body illustrated in Fig. 6(a) .
Like the outer honeycomb fired body 120 illustrated in Figs. 4(a) and 4(b), the outer honeycomb fired body 130 illustrated in Figs. 6(a) and 6(b) includes a large number of cells 131 and 137a to 137d which are placed along the longitudinal direction (the direction of the arrow "c" in Fig. 6(a)) in parallel with one another with a cell wall 133 interposed therebetween. The outer honeycomb fired body 130 is surrounded by peripheral walls 134a to 134d.
Among the cells 131 and 137a to 137d, the cells 131 are inner cells and the cells 137a to 137d are peripheral cells.
All the inner cells 131 are complete cells.
Among the peripheral cells 137a to 137d, the peripheral cells 137a that are in contact with the peripheral wall 134a partially constituting the periphery of the ceramic block have the same cross-sectional shape as that of the inner cells 131.

The outer honeycomb fired body 130 has, in the cross-section, a linear part 136 in a peripheral part 130d which partially constitutes the periphery of the honeycomb structured body (ceramic block) , in the periphery 130a to 130d. The linear part 136 of the outer honeycomb fired body 130 constitutes a part of the peripheral part 130d and is formed by a part of the peripheral wall 134a. The part of the peripheral wall 134a is in contact with 6 adjacent cells 131. The linear part 136, which is a part of the peripheral part 130d, is parallel to the facing peripheral part 130b. Therefore, the linear part 136 of the outer honeycomb fired body 130 is parallel to the adhesive layer between the outer honeycomb fired body and an adjacent inner honeycomb fired body.

Unlike the outer honeycomb fired body 120 illustrated in Figs. 4 (a) and 4(b), the outer honeycomb fired body 130 has a curved part 135 in which the spaces corresponding to the recesses 125b of the outer honeycomb fired body 120 are completely filled.
Accordingly, in the outer honeycomb fired body 130 illustrated in Figs. 6(a) and 6(b), the peripheral part 130d which partially constitutes the periphery of the honeycomb structured body (ceramic block) , in the periphery 130a to 130d of the outer honeycomb fired body 130, has a curved part 135 and a linear part 136 in the cross-section.

In the present embodiment, each outer honeycomb fired body has at least one curved part in the part of the periphery which partially constitutes the periphery of the ceramic block, and the position(s) of the linear part (s) is (are) not limited.
Although, in the outer honeycomb fired body 120 illustrated in Figs. 4(a) and 4(b), the projections 125a and the recesses 125b are all chamfered to serve as curved parts, the outer honeycomb fired bodies may have any structure as long as at least one of the projections and the recesses is chamfered. The position (s) of the chamferedpart(s) is (are) not limited. However, the number of chamfered parts is preferably as large as possible. More preferably, all the projections and the recesses constituting the steps are chamfered.
Although the outer honeycomb fired body 130 illustrated in Figs. 6 (a) and 6 (b) has a configuration in which the recesses are completely filled, some of the recesses may be filled such that the outer honeycomb fired body has steps in a part of the peripheral wall.
In the present embodiment, the cross-sectional shape of the part of the periphery of each outer honeycomb fired body which partially constitutes the periphery of the ceramic block is not particularly limited, as long as the outer honeycomb fired body has a curved part and a linear part in the part of the periphery which partially constitutes the periphery of the ceramic block in the cross-section perpendicular to the longitudinal direction.
The number of outer honeycomb fired bodies including a curved part and a linear part is not limited, provided that the honeycomb structured body includes at least one outer honeycomb fired body that includes a curved part and a linear part in the part of the periphery which partially constitutes the periphery of the ceramic block in the cross-section perpendicular to the longitudinal direction. Preferably, all the outer honeycomb fired bodies of the honeycomb structured body include a curved part and a linear part.

Each of the inner honeycomb fired bodies and outer honeycomb fired bodies constituting the honeycomb structured body according to the present embodiment may have angled parts in the inner walls of each cell. The angled parts may be chamfered.
The phrase "the angled parts of the inner walls of each cell are chamfered" means that the cell has a cross-sectional shape which is the same as that created by filling the angled parts of the cell as if the angled parts of the cell are chamfered (hereinafter, the angled parts of the inner walls of each cell is simply referred to as "angled parts of the cell").
For example, in the present embodiment, the angled parts of the cells may be round corners (as if the cells are R-chamfered) or may be straight lines (as if the cells are C-chamfered).

Each of the inner honeycomb fired bodies and the outer honeycomb fired bodies constituting the honeycomb structured body according to the present embodiment is preferably a porous body made of silicon carbide or silicon-containing silicon carbide.

Next, a method for manufacturing the honeycomb structured body according to the present embodiment is described.
The method for manufacturing the honeycomb structured body according to the present embodiment includes:
molding a ceramic material to manufacture honeycomb molded bodies in which a large number of cells are longitudinally placed in parallel with one another with a cell wall therebetween;
firing the honeycomb molding bodies to manufacture honeycomb fired bodies ; and
combining a plurality of the honeycomb fired bodies with an adhesive layer interposed therebetween to manufacture a ceramic block.
The manufactured honeycomb fired bodies include the outer honeycomb fired bodies and the inner honeycomb fired bodies.
The outer honeycomb fired bodies manufactured through the molding and firing have the following features:
Each outer honeycomb fired body has at least a first periphery and a second periphery;
Each outer honeycomb fired body includes at least a curved part and a linear part in the first periphery in the cross-section perpendicular to the longitudinal direction; and
The linear part of each outer honeycomb fired body is parallel to the facing second periphery of the outer honeycomb fired body, and has a length of 5 to 20 mm.
When combined with each other, each outer honeycomb fired body is held by being sandwiched at the linear part and the second periphery thereof, and is arranged such that the outer honeycomb fired bodies surround the inner honeycomb fired bodies and that the linear part of each outer honeycomb fired body constitutes a part of the outermost periphery of the ceramic block.

Hereinafter, the method for manufacturing the honeycomb structured body according to the present embodiment is described in the order of steps. In the following, an example in which silicon carbide powders are used as ceramic powders is described. (1) A ceramic raw material is molded to manufacture honeycomb molded bodies (molding step).
Specifically, silicon carbide powders having different average particle diameters as ceramic powders are mixed with an organic binder, a liquid plasticizer, a lubricant, and water to prepare a ceramic raw material (wet mixture) for manufacturing honeycomb molded bodies.
Subsequently, the wet mixture is charged into an extruder and extrusion-molded into honeycomb molded bodies having predetermined shapes.

In this step, in order to manufacture honeycomb molded bodies having a substantially quadrangular (substantially square) cross-section (honeycomb molded bodies to be processed into inner honeycomb fired bodies), and honeycomb molded bodies having a cross-section defined by three line segments and one substantial arc in which the angles formed by two line segments out of these three line segments are 90° and 135° (honeycomb molded bodies to be processed into outer honeycomb fired bodies) , extrusion-molding dies in accordance with these desired shapes are used.
The term "honeycomb molded body (bodies)" used in the following steps is intended to include these two kinds of honeycomb molded bodies without specifying these.

(2) Next, the honeycomb molded bodies are cut into a predetermined length, and the cut honeycomb molded bodies are dried by a microwave drying apparatus, a hot-air drying apparatus, a dielectric drying apparatus, a reduced-pressure drying apparatus, a vacuum drying apparatus, a freeze drying apparatus, or the like. Then, a plug material past to be a plug is filled into predetermined cells to seal the cells (sealing step).
Here, the wet mixture can be used as the plug material paste.

(3) Subsequently, the honeycomb structured bodies are heated in a degreasing furnace so that organic substances in the honeycomb molded bodies are removed (degreasing step). The degreased honeycomb molded bodies are transported to a firing furnace and then fired (firing step). In this manner, inner honeycomb fired bodies as illustrated in Figs. 3 (a) and 3(b), and outer honeycomb fired bodies as firing in Figs. 4(a) and 4(b) are manufactured.
Conditions for the cutting, drying, sealing, degreasing, and firing steps may be conditions conventionally used to manufacture honeycomb fired bodies.

(4) Next, an adhesive paste is applied to predetermined side faces of the inner honeycomb fired bodies and the outer honeycomb bodies, which have cells each sealed at a predetermined end, to form adhesive paste layers. On each of the adhesive paste layers, a honeycomb fired body is laminated. This procedure is sequentially repeated such that a ceramic block in which a predetermined number of honeycomb fired bodies are bound is manufactured (combining step).
Here, the adhesive paste contains, for example, an inorganic binder, an organic binder, and inorganic particles. The adhesive paste may further contain at least one of an inorganic fiber and a whisker.

In the combining step, the inner honeycomb fired bodies are arranged at and/or near the center and the outer honeycomb fired bodies are arranged to surround the inner honeycomb fired bodies, and thus a ceramic block as illustrated in Figs. 1 and 2 is manufactured.
The outer honeycomb fired bodies are arranged such that the linear part formed in the periphery of each outer honeycomb fired body constitutes a part of the outermost periphery of the ceramic block.
In this step, each outer honeycomb fired body is held by being sandwiched at the linear part formed in the periphery of the outer honeycomb fired body and a side face.

(5) Subsequently, a coating material paste is applied to the peripheral surface of the substantially round pillar-shaped ceramic block and is dried and solidified into a coat layer (coat-layer forming step).
When the coating material paste is applied to the peripheral surface of the ceramic block, the recesses of the outer honeycomb fired bodies are filled with the coating material paste.
The adhesive paste can be used as the coating material paste. The coating material paste may be a paste with a composition different from that of the adhesive paste.
The coat layer may not be provided and may be provided, if necessary.
The honeycomb structured body according to the present embodiment can be manufactured through the above steps.

The effects of the honeycomb structured body according to the present embodiment are listed below.
(1) In the honeycomb structured body according to the present embodiment, each of the outer honeycomb fired bodies includes at least a curved part and a linear part in the cross-section of a part of the periphery of the outer honeycomb fired body which partially constitutes the periphery of the ceramic block. The linear part is parallel to at least one of the adhesive layer between the outer honeycomb fired body and an adjacent inner honeycomb fired body and the adhesive layer between the outer honeycomb fired body and an adjacent outer honeycomb fired body.
The linear part in the periphery of each outer honeycomb fired body facilitates holding the outer honeycomb fired body by sandwiching the outer honeycomb fired body at its side faces when a plurality of outer honeycomb fired bodies are combined together. Therefore, it is possible to prevent defects such as fractures and cracks that occur at the held sites of the outer honeycomb fired bodies, and fractures and cracks that occur when a jig or the like contacts the outer honeycomb fired bodies. Consequently, since the frequency of defects of the honeycomb structured body can be reduced, the manufacturing efficiency of the honeycomb structured body can be improved.

(2) In the honeycomb structured body according to the present embodiment, the linear part of each of the outer honeycomb fired bodies has a length of 5 to 20 mm.
With a length in this range, the linear part of each outer honeycomb fired body enables the outer honeycomb fired body to be held in a suitable manner.

(3) In the honeycomb structured body according to the present embodiment, the linear part of each of the outer honeycomb fired bodies is formed by a part of a peripheral wall, and the part is in contact with 5 to 10 adjacent cells.
When the linear part is formed by a part of the peripheral wall which is in contact with 5 to 10 adjacent cells, the linear part has a sufficient length. Therefore, the linear part enables the outer honeycomb fired body to be held in a suitable manner.

(4) In the honeycomb structured body according to the present embodiment, the linear part of each of the outer honeycomb fired bodies is located in an end portion of the part of the periphery which partially constitutes the periphery of the ceramic block.
When the linear part of each of the outer honeycomb fired bodies is located in an end portion of the part of the periphery which partially constitutes the periphery of the ceramic block, the outer honeycomb fired body can be easily held.

(5) In the honeycomb structured body according to the present embodiment, each of the outer honeycomb fired bodies includes a curved part in the part of the periphery of the outer honeycomb fired body which partially constitutes the periphery of the ceramic block in the cross-section.
If the outer honeycomb fired bodies are designed to have a peripheral cross-section defined only by linear parts, the outer honeycomb fired bodies have a lot of steps formed by a projection and a recess in the periphery. A disadvantage of such outer honeycomb fired bodies having steps is that defects such as fractures at the projections of the steps and cracks at the recesses of the steps are likely to occur when these outer honeycomb fired bodies are, for example, held or transported using a jig or the like.
On the other hand, the honeycomb structured body that includes the outer honeycomb fired bodies having a curved part in the cross-section can reduce the frequency of defects such as fractures at the projections of steps and cracks at the recesses of the steps, compared to honeycomb structured bodies that include only outer honeycomb fired bodies with no curved part in the cross-section.

(6) In the honeycomb structured body according to the present embodiment, the cells of each of the outer honeycomb fired bodies include peripheral cells in contact with any of the peripheral walls of the honeycomb fired body, and inner cells located inward of the peripheral cells, the inner cells are complete cells formed in accordance with a basic formation pattern, and each of peripheral cells that are in contact with the peripheral wall partially constituting the periphery of the ceramic block, among the peripheral cells, has a same shape as that of the inner cells in the cross-section perpendicular to the longitudinal direction.
When all the cells of the outer honeycomb fired bodies have the same cross-sectional shape, the plug material paste can be easily filled into the cells. Consequently, the frequency of sealing defects of the plug material paste can be reduced, and therefore the manufacturing efficiency of the honeycomb structured body can be improved.

(7) In the honeycomb structured body according to the present embodiment, at least one of the outer honeycomb fired bodies includes an angled part formed by a projection and a recess in the periphery, and the peripheral walls of the outer honeycomb fired bodies have a substantially uniform thickness except the angled part.
In other words, the part of the peripheral wall of the honeycomb structured body which constitutes the periphery of the ceramic block has a substantially uniform thickness except the angular part formed in the periphery of the honeycomb structured body. When a honeycomb fired body designed to have this structure is manufactured, it is possible to avoid distortion of cell walls of a honeycomb molded body through extrusion-molding. Therefore, it is possible to manufacture a honeycomb structured body with non-distorted cell walls. Thus, the frequency of molding defects of honeycomb molded bodies can be reduced, and hence the manufacturing efficiency of the honeycomb structured body can be improved.

(8) In the honeycomb structured body according to the present embodiment, the cross-section of each of the outer honeycomb fired bodies perpendicular to the longitudinal direction has a substantially sector shape formed by three line segments and the part of the periphery which partially constitutes the periphery of the ceramic block, and the cross-section of the inner honeycomb fired body perpendicular to the longitudinal direction is substantially quadrangular.
In the case that the outer honeycomb fired bodies having the above shape and the inner honeycomb fired bodies having the above shape are used, the number of honeycomb fired bodies required to manufacture the honeycomb structured body can be reduced compared to the number of honeycomb fired bodies required to manufacture a conventional honeycomb structured body.
Thus, the honeycomb structured body having a predetermined shape can be easily manufactured, and hence the manufacturing efficiency of the honeycomb structured body can be further improved, which will lead to a reduction of the manufacturing costs of the honeycomb structured body.

### (Example 1)

The following description will discuss Example that more specifically discloses the first embodiment of the present invention, and the present invention is not intended to be limited only by Example.

(1) An amount of 52.8% by weight of coarse powder of silicon carbide having an average particle diameter of 22 µm and 22.6% by weight of fine powder of silicon carbide having an average particle diameter of 0.5 µm were mixed. To the resulting mixture, 2.1% by weight of an acrylic resin, 4.6% by weight of an organic binder (methyl cellulose), 2.8% by weight of a lubricant (UNILUB, product of NOF Corporation), 1.3% by weight of glycerin, and 13.8% by weight of water were added and then kneaded to prepare a wet mixture. Then, a molding step of extrusion-molding the wet mixture was performed.
In this step, raw honeycomb molded bodies having the same shape as that of the inner honeycomb fired body 110 illustrated in Figs. 3(a) and 3(b) and having unsealed cells, and raw honeycomb molded bodies having the same shape as that of the outer honeycomb fired body 120 illustrated in Figs. 4(a) and 4(b) and having unsealed cells were manufactured.

(2) The raw honeycomb molded bodies were dried with a microwave drying apparatus. Thus, dried honeycomb molded bodies were obtained. Subsequently, predetermined cells of dried honeycomb molded bodies were filled and sealed with a plug material paste having the same composition as that of the wet mixture. After the sealing of the cells, the honeycomb molded bodies having been filled with the plug material paste were dried again with the drying apparatus.

(3) The dried honeycomb molded bodies with the sealed cells were degreased at 400°C. Thereafter, the degreased honeycomb molded bodies were fired at 2200°C in a normal-pressure argon atmosphere for three hours.
Thus, inner honeycomb fired bodies and outer honeycomb fired bodies were manufactured.
The inner honeycomb fired bodies are porous silicon carbide sintered bodies (porosity: 45%, average pore diameter: 15 µm , size: 34.5 mm × 34.5 mm × 150 mm, number of cells (cell density): 46.5 pcs/cm² (300 pcs/inch²), cell wall thickness: 0.25 mm (10 mil), cell length (length of arrow "X" in Fig. 5): 1.42 mm).
The outer honeycomb fired bodies are also porous silicon carbide sintered bodies whose porosity, average pore diameter, number of cells (cell density), cell wall thickness, cell length are the same as those of the inner honeycomb fired bodies. Each outer honeycomb fired body has a cross-sectional shape formed by three line segments and one substantial arc. The angles formed by two line segments out of the three line segments are 90° and 135° (line segment 120a = 20.8 mm, line segment 120b = 35.0 mm, line segment 120c = 35.7 mm (Fig. 2)). The substantial arc 120d of each outer honeycomb fired body includes a curved part and a linear part. The curved part of each outer honeycomb fired body has projections and recesses. The projections and recesses are R-chamfered, that is, have a round corner, and the curvature radius is 0.5 mm. The linear part of each outer honeycomb fired body is parallel to the facing line segment 120b and has a length of 8.52 mm.

(4) An adhesive paste was applied to predetermined side faces of the inner honeycomb fired bodies and the outer honeycomb bodies. Four inner honeycomb fired bodies and eight outer honeycomb fired bodies were arranged as illustrated in Fig. 1 and combined together with the adhesive paste interposed therebetween. Thus, an aggregated body of the honeycomb fired bodies was manufactured.
The adhesive paste of the aggregated body of the honeycomb fired bodies was dried and solidified at 180°C for 20 minutes into an adhesive layer having a thickness of 1 mm. Thus, a round-pillar shaped ceramic block was manufactured.
The composition of the used adhesive paste was as follows: silicon carbide particles (average particle diameter 0.6 µm): 30.0% by weight; silica sol (solids content of 30% by weight): 21.4% by weight; and carboxymethyl cellulose: 8.0% by weight; water: 40.6% by weight.

(5) A coating material paste layer was formed on the periphery of the ceramic block using a coating material paste having the same composition as that of the adhesive paste used in the step (4). In this step, the coating material paste was applied to fill the recesses of the outer honeycomb fired bodies.
Thereafter, the coating material paste layer was dried and solidified at 120°C such that a round pillar-shaped honeycomb structured body (diameter 143.8 mm x length 150 mm) having a coat layer formed on the periphery was manufactured.

### (Second Embodiment)

Hereinafter, a second embodiment, which is one embodiment of the present invention, is described.
The inner honeycomb fired bodies and the outer honeycomb fired bodies constituting the honeycomb structured body according to the present embodiment have external appearance shapes similar to those of the inner honeycomb fired bodies and the outer honeycomb fired bodies constituting the honeycomb structured body according to the first embodiment of the present invention. The outer honeycomb fired bodies and the inner honeycomb fired bodies constituting the ceramic block (honeycomb structured body) are combined in a similar manner to the first embodiment of the present invention.
In the first embodiment of the present invention, in each outer honeycomb fired body, the peripheral cells that are in contact with the peripheral wall partially constituting the periphery of the ceramic block and the inner cells have the same cross-sectional shape; whereas, in the present embodiment, in each outer honeycomb fired body, the peripheral cells that are in contact with the peripheral wall partially constituting the periphery of the ceramic block include an incomplete cell whose cross-sectional shape is different from that of the inner cells.

Hereinafter, the outer honeycomb fired bodies in the honeycomb structured body according to the second embodiment of the present invention are described.

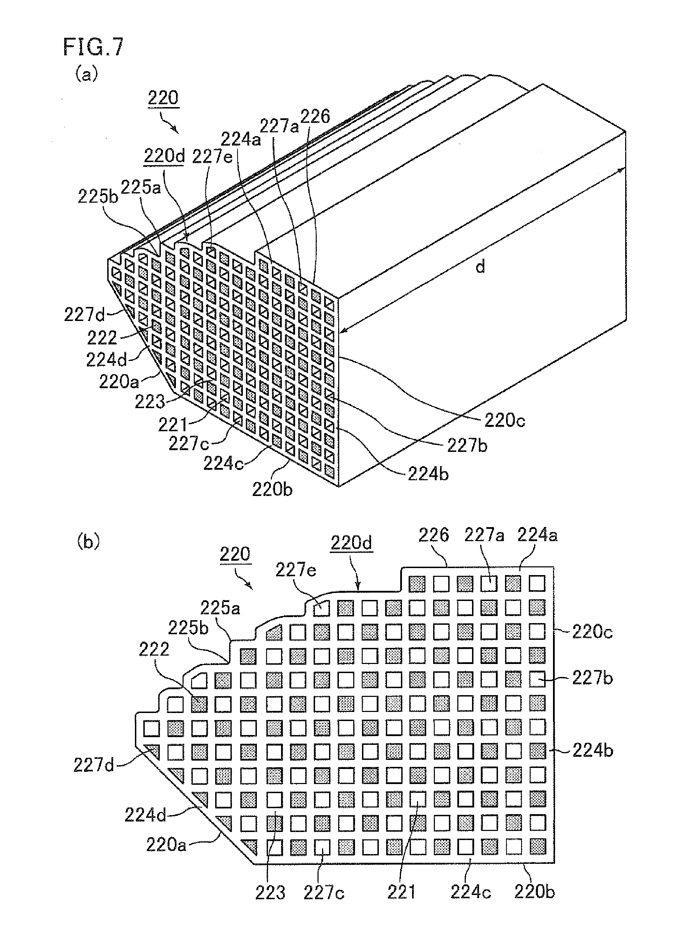

Fig. 7(a) is a perspective view schematically illustrating one example of an outer honeycomb fired body in a honeycomb structured body according to a second embodiment of the present invention, and Fig. 7 (b) is a side view of the outer honeycomb fired body illustrated in Fig. 7(a).

The outer honeycomb fired body 220 illustrated in Figs. 7 (a) and 7 (b) includes a large number of cells 221 and 227a to 227e that are placed in the longitudinal direction (the direction of the arrow "d" in Fig. 7(a)) in parallel with one another with a cell wall 223 interposed therebetween. The outer honeycomb fired body 220 is surrounded by peripheral walls 224a to 224d. Each of the cells 221 and 227a to 227e is sealed at either one end with a plug 222.
Therefore, for example, exhaust gas enters cells 221 open at one end and exits from other cells 221 open at the other end inevitably through the cell walls 223 separating these cells 221. Thus, the cell walls 223 serve as filters.

The cells 221 and 227a to 227e of the outer honeycomb fired body 220 include peripheral cells 227a to 227e that are in contact with any of the peripheral walls 224a to 224d, and inner cells 221 located inward of the peripheral cells 227a to 227e.

The inner cells 221 of the outer honeycomb fired body 220 are formed in a lattice pattern, which is a basic formation pattern. All the inner cells 221 have the same substantially quadrangular (substantially square) cross-sectional shape, and the same cross-sectional area. Namely, all the inner cells 221 are complete cells.

Among the peripheral cells 227a to 227e of the outer honeycomb fired body 220, the peripheral cells 227a, which are in contact with the peripheral wall 224a partially constituting the periphery of the honeycomb structured body (ceramic block), have the same cross-sectional shape as that of the inner cells 221, and the peripheral cells 227e, which are in contact with the peripheral wall 224a partially constituting the periphery of the honeycomb structured body (ceramic block), have a different cross-sectional shape from that of the inner cells 221. Namely, the peripheral cells 227a are complete cells and the peripheral cells 227e are incomplete cells.

Like the first embodiment of the present invention, the peripheral cells 227b, which are in contact with the peripheral wall 224b, and the peripheral cells 227c, which are in contact with the peripheral wall 224c, have the same cross-sectional shape as that of the inner cells 221. Namely, the peripheral cells 227b and 227c are complete cells.
The peripheral cells 227d, which are in contact with the peripheral wall 224d, are incomplete cells whose cross-sectional shape is different from that of the inner cells 221, which are complete cells.

Thus, in the present embodiment, among the peripheral cells, the peripheral cells that are in contact with the peripheral wall partially constituting the periphery of the ceramic block include not only complete cells but also incomplete cells whose cross-sectional shape is different from that of the complete cells.
With respect to the peripheral cells, the peripheral cells except the incomplete cells have a substantially quadrangular (substantially square) cross-section like the inner cells, and each have the same cross-section area.

In the present embodiment, with respect to the peripheral cells, the number of incomplete cells among the peripheral cells that are in contact with the peripheral wall partially constituting the periphery of the ceramic block is at least one and is not particularly limited. Namely, the incomplete cells are provided considering the shape of the peripheral wall of the outer honeycomb fired body and the shape of the peripheral cells defined by the peripheral wall.

The cross-sectional area of the incomplete cells is not particularly limited and may be a predetermined size that enables the plug material past to be easily filled into the cells and that will cause no sealing defect.
Specifically, the incomplete cells preferably have a cross-section perpendicular to the longitudinal direction of the cells which can contain a circle with a diameter of 0.90 mm, and more preferably a circle with a diameter of 0.95 mm.
In these cases, the plug material paste can be easily filled into the cells, rarely resulting in leakage and overflow of the plug material paste. Consequently, the incomplete cells can be suitably filled, and therefore the frequency of sealing defects can be reduced.

In the present embodiment as well, each of the outer honeycomb fired bodies includes at least a curved part and a linear part in the part of the periphery of the outer honeycomb fired body which partially constitutes the periphery of the ceramic block in the cross-section perpendicular to the longitudinal direction.
In the outer honeycomb fired body 220 illustrated in Figs. 7 (a) and 7(b), a peripheral part 220d which partially constitutes the periphery of the ceramic block, in the periphery 220a to 220d, includes curved parts 225a and 225b, and a linear part 226 in the cross-section.

The structure of the linear part of the outer honeycomb fired bodies is similar to that of the first embodiment of the present invention.
The linear part of each outer honeycomb fired body is parallel to at least one of the adhesive layer between the outer honeycomb fired body and an adjacent inner honeycomb fired body and the adhesive layer between the outer honeycomb fired body and an adjacent outer honeycomb fired body. The linear part of each outer honeycomb fired body has a length of 5 to 20 mm.
In the outer honeycomb fired body 220 illustrated in Figs. 7(a) and 7(b), the linear part 226 constitutes a part of a peripheral part 220d and is formed by a part of a peripheral wall 224a. The part of the peripheral wall 224a is in contact with 6 adjacent cells 221.
The linear part 226, which is a part of the peripheral part 220d, is parallel to the facing peripheral part 220b. Accordingly, the linear part 226 of the outer honeycomb fired body 220 is parallel to the adhesive layer between the outer honeycomb fired body and an adjacent inner honeycomb fired body.

The structure of the curved part of the outer honeycomb fired bodies is similar to that of the first embodiment of the present invention.
In the outer honeycomb fired body 220 illustrated in Figs. 7(a) and 7(b), the peripheral wall 224a has steps formed by a projection 225a and a recess 225b at positions in accordance with the arrangement of the peripheral cells 227a and 227e. The cross-section of each of the projections 225a and the recesses 225b has a shape with a chamfered part. Therefore, in the outer honeycomb fired body 220, the chamfered parts, that is, the projections 225a and the recesses 225b correspond to curved parts.

The outer honeycomb fired bodies may have a curved part that is like the curved part of the outer honeycomb fired body 130 illustrated in Fig. 6(a) and 6(b) in which the spaces corresponding to the recesses are completely filled. Alternatively, some of the recesses may be filled such that the outer honeycomb fired bodies has steps in a part of the peripheral wall.

Next, the inner honeycomb fired bodies in the honeycomb structured body according to the second embodiment of the present invention are described.
The inner honeycomb fired bodies are similar to the inner honeycomb fired bodies of the first embodiment of the present invention.
All the cells of the inner honeycomb fired bodies are complete cells.

Each of the inner honeycomb fired bodies and the outer honeycomb fired bodies constituting the honeycomb structured body according to the present embodiment may have angled parts in the inner walls of each cell. The angled parts may be chamfered.
For example, in the present embodiment, the angled parts of the cells may be round corners (as if the cells are R-chamfered) or may be straight lines (as if the cells are C-chamfered).

In a method for manufacturing the honeycomb structured body according to the present embodiment, the honeycomb structured body according to the present embodiment can be manufactured in the same manner as that of the first embodiment of the present invention, except that dies having different shapes are used for extrusion-molding to manufacture honeycomb molded bodies having predetermined shapes.

In the present embodiment, the following effect as well as the effects (1) to (5), (7) and (8) described in the first embodiment of the present invention is provided. (9) In the honeycomb structured body according to the present embodiment, the cells of each of the outer honeycomb fired bodies include peripheral cells in contact with any of the peripheral walls of the outer honeycomb fired body, and inner cells located inward of the peripheral cells, the inner cells are complete cells formed in accordance with a basic formation pattern, and peripheral cells that are in contact with the peripheral wall partially constituting the periphery of the ceramic block, among the peripheral cells, include an incomplete cell that has a different shape from that of the inner cells in the cross-section perpendicular to the longitudinal direction.
In the case that the honeycomb structured body is designed to include incomplete cells, as many cells as possible can be arranged. Therefore, when this honeycomb structured body is intended to be used as an exhaust gas purifying filter, the filtration area for capturing PM can be increased. Accordingly, the pressure loss of the honeycomb structured body can be suppressed to low levels.

### (Third Embodiment)

Hereinafter, a third embodiment, which is one embodiment of the present invention, is described.
The inner honeycomb fired bodies and the outer honeycomb fired bodies constituting the honeycomb structured body according to the present embodiment have external appearance shapes similar to those of the inner honeycomb fired bodies and the outer honeycomb fired bodies constituting the honeycomb structured body according to the second embodiment of the present invention. The combination of the outer honeycomb fired bodies and the inner honeycomb fired bodies constituting the ceramic block (honeycomb structured body) are combined in a manner similar to the second embodiment of the present invention.
In the present embodiment, the peripheral cells of each of the outer honeycomb fired bodies except incomplete cells, the inner cells of each of the outer honeycomb fired bodies, and the cells of each of the inner honeycomb fired bodies each include large-volume cells and small-volume cells, and the cross-sectional area of the large-volume cells perpendicular to the longitudinal direction is larger than the cross-sectional area of the small-volume cells perpendicular to the longitudinal direction.

Fig. 8 (a) is a side view schematically illustrating one example of an inner honeycomb fired body in a honeycomb structured body according to a third embodiment of the present invention, and Fig. 8(b) is a side view schematically illustrating one example of outer honeycomb fired body in the honeycomb structured body according to the third embodiment of the present invention.

First, the inner honeycomb fired bodies are described.
In the inner honeycomb fired body 310 illustrated in Fig. 8(a), cells 311a and 311b are arranged in parallel with one another with a cell wall 313 interposed therebetween. The inner honeycomb fired body 310 is surrounded by the peripheral walls 314a to 314d. The cells 311a and 311b include large-volume cells 311a and small-volume cells 311b. The cross-sectional area of the large-volume cells 311a (the area of the cross-section perpendicular to the longitudinal direction) is larger than the cross-section of the small-volume cells 311b. The large-volume cells 311a and the small-volume cells 311b are alternately arranged.
In Fig. 8(a), the cross-section of the large-volume cells 311a is substantially octagonal, and the cross-section of the small-volume cells 311b is substantially rectangular. Thus, the cells 311a and 311b are formed in accordance with the basic formation pattern and therefore are considered to be complete cells.

The large-volume cells 311a are open at a first end of the inner honeycomb fired body 310 and sealed with a plug (not shown) at a second end. The small-volume cells 311b are sealed with a plug 312 at the first end of the inner honeycomb fired body 310 and open at the second end.
Accordingly, for example, exhaust gas enters large-volume cells 311a and flows out of small-volume cells 311b inevitably after passing through the cell walls 313 separating the large-volume cells 311a and the small-volume cells 311b. Thus, the cell walls 313 function as filters.

Next, the outer honeycomb fired bodies are described.
Like the inner honeycomb fired bodies, in the outer honeycomb fired body 320 illustrated in Fig. 8(b), cells 321a, 321b and 327a to 327e are arranged in parallel with one another with a cell wall 323 interposed therebetween. The outer honeycomb fired body 320 is surrounded by peripheral walls 324a to 324d.

The cells 321a, 321b and 327a to 327e of the outer honeycomb fired body 320 include peripheral cells 327a to 327e that are in contact with any of the peripheral walls 324a to 324d, and inner cells 321a and 321b located inward of the peripheral cells 327a to 327e.

The inner cells 321a and 321b of the outer honeycomb fired body 320 are complete cells like the cells 311a and 311b of the inner honeycomb fired body 310. Namely, the inner cells 321a and 321b, which are complete cells, include large-volume cells 321a and small-volume cells 321b and the cross-sectional area of the large-volume cells 321a (the area of the cross-section perpendicular to the longitudinal direction) is larger than the cross-sectional area of the small-volume cells 321b.
The large-volume cells 321a are open at a first end of the outer honeycomb fired body 320 and sealed with a plug (not shown) at a second end. The small-volume cells 321b are sealed with a plug 322 at the first end of the outer honeycomb fired body 320 and open at the second end.
Accordingly, for example, exhaust gas enters large-volume cells 321a and flows out of small-volume cells 321b inevitably after passing through the cell walls 323 separating the large-volume cells 321a and the small-volume cells 321b. Thus, the cell walls 323 function as filters.

Among the peripheral cells 327a to 327e of the outer honeycomb fired body 320, the peripheral cells 327a, which are in contact with the peripheral wall 324a, the peripheral cells 327b, which are in contact with the peripheral wall 324b, and the peripheral cells 327c, which are in contact with the peripheral wall 324c, have the same cross-sectional shape as that of the large-volume cells 321a, which are inner cells of the outer honeycomb fired body 320. Namely, the peripheral cells 327a, 327b and 327C of the outer honeycomb fired body 320 are complete cells.
On the other hand, among the peripheral cells 327a to 327e of the outer honeycomb fired body 320, the peripheral cells 327d, which are in contact with the peripheral wall 324d, and the peripheral cells 327e, which are in contact with the peripheral wall 324a, have a different cross-sectional shape from that of the large-volume cells 321a, which are inner cells of the outer honeycomb fired body 320 and complete cells. In other words, the peripheral cells 327d and 327e of the outer honeycomb fired body 320 are incomplete cells whose cross-sectional shape is different from that of the complete cells.
Namely, in the outer honeycomb fired body 320 illustrated in Fig. 8(b), the peripheral cells include not only complete cells but also incomplete cells whose cross-sectional shape is different from that of the complete cells.
In the outer honeycomb fired body 320 illustrated in Fig. 8(b), like the inner cells, the peripheral cells except the incomplete cells include large-volume cells and small-volume cells.

In the present embodiment, the peripheral cells may not include incomplete cells. In this case, the present embodiment may be considered as one form of the first embodiment in which the cells having large and small cell cross-sectional areas are employed.

The cross-sectional shapes of the large-volume cells and the small-volume cells may be any shapes as long as the cross-sectional area of the large-volume cells is larger than the cross-sectional area of the small-volume cells. Therefore, the cross-sectional shapes of the large-volume cells and the small-volume cells are not limited to the substantial octagonal shape and the substantial rectangular shape, respectively, and the large-volume cells and the small-volume cells may be designed to have any cross-sectional shapes. For example, the following shapes can be employed.

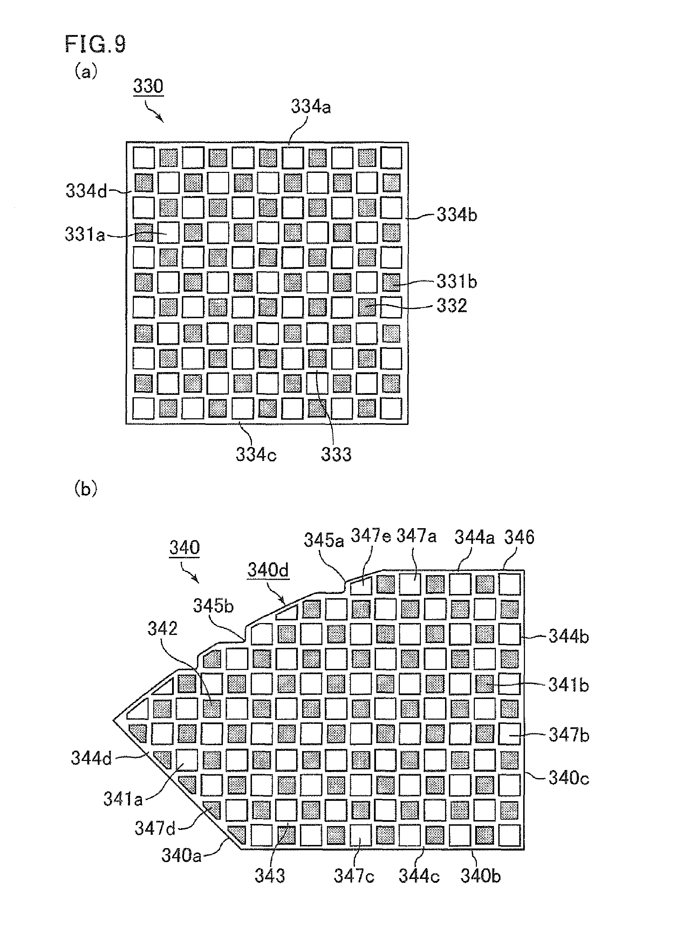

Fig. 9(a) is a side view schematically illustrating another example of the inner honeycomb fired body in the honeycomb structured body according to the third embodiment of the present invention, and Fig. 9(b) is a side view schematically illustrating another example of the outer honeycomb fired body in the honeycomb structured body according to the third embodiment of the present invention.
In each of the inner honeycomb fired body 330 illustrated in Fig. 9 (a) and the outer honeycomb fired body 340 illustrated in Fig. 9(b), the cross-section of the large-volume cells is substantially rectangular (substantially square), and the cross-section of the small-volume cells is substantially rectangular shape (substantially square).

Each of the large-volume cells and the small-volume cells may include right-angled parts in the cross-section. Alternatively, the parts corresponding to the right-angled parts may be round corners (as if the cells are R-chamfered) or may be straight lines (as if the angled parts of the cell are C-chamfered).

In the present embodiment as well, each outer honeycomb fired body includes at least a curved part and a linear part in a part of the periphery of the outer honeycomb fired body which partially constitutes the periphery of the ceramic block in the cross-section perpendicular to the longitudinal direction.
The outer honeycomb fired body 320 illustrated in Fig. 8(b) is an example in which a peripheral part 320d which partially constitutes the periphery of the ceramic block, in the periphery 320a to 320d, includes curved parts 325a and 325b, and a linear part 326 in the cross-section. The outer honeycomb fired body 340 illustrated in Fig. 9(b) is an example in which, similarly, a peripheral part 340d which partially constitutes the periphery of the ceramic block, in the periphery 340a to 340d, includes curved parts 345a and 345b, and a linear part 346 in the cross-section.

The structure of the linear part of the outer honeycomb fired bodies is similar to that of the first embodiment of the present invention.
The linear part of each outer honeycomb fired body is parallel to at least one of the adhesive layer between the outer honeycomb fired body and an adjacent inner honeycomb fired body and the adhesive layer between the outer honeycomb fired body and an adjacent outer honeycomb fired body. The linear part of each outer honeycomb fired body has a length of 5 to 20 mm.
In the outer honeycomb fired body 320 illustrated in Fig. 8 (b), the linear part 326 is a part of a peripheral part 320d and is parallel to a facing peripheral part 320b. In other words, the linear part 326 of the outer honeycomb fired body 320 is parallel to the adhesive layer between the outer honeycomb fired body and an adjacent inner honeycomb fired body. The outer honeycomb fired body 340 illustrated in Fig. 9(b) also has the same configuration.

The structure of the curved parts of the outer honeycomb fired bodies is similar to that of the first embodiment of the present invention.
In the outer honeycomb fired body 320 illustrated in Fig. 8(b), the peripheral wall includes steps formed by a projection 325a and a recess 325b at positions in accordance with the arrangement of the peripheral cells 327a and 327e. The cross-section of each of the projections 325a and the recesses 325b has a shape with a chamfered part. Therefore, in the outer honeycomb fired body 320, the chamfered parts, that is, the projections 325a and the recesses 325 correspond to curved parts. The outer honeycomb fired body 340 illustrated in Fig. 9 (b) also has the same configuration.

The outer honeycomb fired bodies may have a curved part that is like the curved part of the outer honeycomb fired body 130 illustrated in Fig. 6(a) and 6(b) in which the spaces corresponding to the recesses are completely filled. Alternatively, some of the recesses may be filled such that the outer honeycomb fired bodies have steps in a part of the peripheral wall.

Each of the inner honeycomb fired bodies and the outer honeycomb fired bodies constituting the honeycomb structured body according to the present embodiment may have angled parts in the inner walls of each cell. The angled parts may be chamfered.
For example, in the present embodiment, the angled parts of the cells may be round corners (as if the cells are R-chamfered) or may be straight lines (as if the cells are C-chamfered).

In a method for manufacturing the honeycomb structured body according to the present embodiment, the honeycomb structured body according to the present embodiment can be manufactured in the same manner as that of the first embodiment of the present invention, except that dies having different shapes are used for extrusion-molding to manufacture honeycomb molded bodies having predetermined shapes.

In the present embodiment, the following effect as well as the effects (1) to (5), (7) and (8) described in the first embodiment of the present invention and the effect (9) described in the second embodiment of the present invention is provided.
(10) In the honeycomb structured body according to the present embodiment, the peripheral cells of each of the outer honeycomb fired bodies except the incomplete cells, the inner cells of each of the outer honeycomb fired bodies, and the cells of each of the inner honeycomb fired bodies each include large-volume cells and small-volume cells, and the cross-sectional area of the large-volume cells perpendicular to the longitudinal direction is larger than the cross-sectional area of the small-volume cells perpendicular to the longitudinal direction.
The honeycomb structured body having the above-described structure can capture a larger amount of PM when used as an exhaust gas purifying filter.

### (Fourth Embodiment)

Hereinafter, a fourth embodiment, which is one embodiment of the present invention, is described.
In the present embodiment, the external appearance shape of the inner honeycomb fired bodies is similar to that of the first to third embodiments of the present invention, and the external appearance shape of the outer honeycomb fired bodies is different from that of the first to third embodiments of the present invention.
Specifically, in the present embodiment, the combination of honeycomb fired bodies is different from that of the first to third embodiment of the present invention. Namely, honeycomb fired bodies whose cross-section is substantially rectangular (substantially square) are used as inner honeycomb fired bodies, and honeycomb fired bodies of a plurality of predetermined shapes which have different cross-sectional shapes are used as outer honeycomb fired bodies. The inner honeycomb fired bodies and the outer honeycomb fired bodies of the plural kinds are assembled with an adhesive layer interposed therebetween into a ceramic block having a predetermined shape (for example, the shape of the cross-section is a substantially circle or the like).

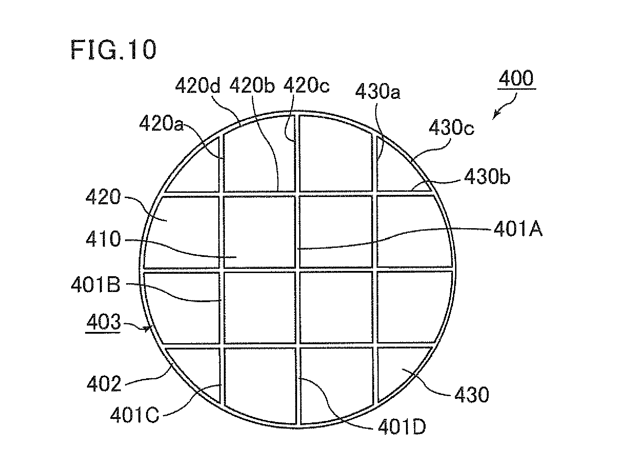

Fig. 10 is a side view schematically illustrating one example of a honeycomb structured body according to a fourth embodiment of the present invention.

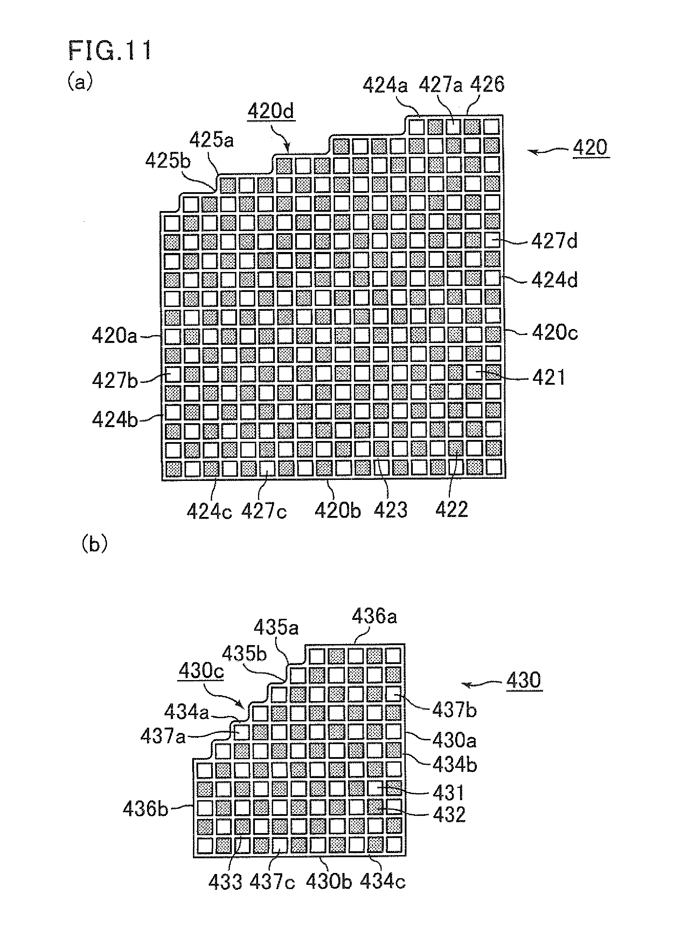

Figs. 11(a) and 11(b) are side views each schematically illustrating one example of an outer honeycomb fired body in the honeycomb structured body according to the fourth embodiment of the present invention.

The honeycomb structured body 400 illustrated in Fig. 10 includes a ceramic block 403 in which eight outer honeycomb fired bodies 420 having a shape as illustrated in Fig. 11(a), four outer honeycomb fired bodies 430 having a shape as illustrated in Fig. 11(b), and four inner honeycomb fired bodies 410 arranged inward thereof are combined with adhesive layers 401A to 401D interposed therebetween. On the periphery of the ceramic block 403, a coat layer 402 is formed. It should be noted that the formation of a coat layer is optional.
The shapes illustrated in Figs. 11 (a) and 11(b) are each formed by three line segments and a side formed by the combination of a linear part and steps, and the combination of lines and steps is different between the two shapes illustrated in Figs. 11 (a) and 11(b).

As illustrated in Fig. 10, the cross-section of the inner honeycomb fired bodies 410 is substantially rectangular (substantially square).
As illustrated in Fig. 10, the cross-sectional shape of the outer honeycomb fired bodies 420 is formed by three line segments 420a, 420b and 420c and one substantial arc 420d. The two angles formed by two line segments out of the three line segments (the angle formed by the line segments 420b and 420c and the angle formed by the line segments 420a and 420b) are both 90°.
The cross-sectional shape of the other outer honeycomb fired bodies 430 is formed by two line segments 430a and 430b and one substantial arc 430c. The angle formed by these two line segments (the angle between the line segments 430a and 430b) is 90°.
Each of the honeycomb fired bodies 410, 420 and 430 is preferably a porous body made of silicon carbide or silicon-containing silicon carbide.

In the present embodiment as well, each of the outer honeycomb fired bodies includes at least a curved part and a linear part in a part of the periphery of the outer honeycomb fired body which partially constitutes the periphery of the ceramic block in the cross-section perpendicular to the longitudinal direction.
The outer honeycomb fired body 420 illustrated in Fig. 11(a) is an example in which a peripheral part 420d which partially constitutes the periphery of the ceramic block, in the periphery 420a to 420d, includes curved parts 425a and 425b, and a linear part 426 in the cross-section.
The outer honeycomb fired body 430 illustrated in Fig. 11(b) is an example in which a peripheral part 430c which partially constitutes the periphery of the ceramic block, in the periphery 430a to 430c, includes curved parts 435a and 435b, and linear parts 436a and 436b in the cross-section.

In the present embodiment, the structure of the linear parts of the outer honeycomb fired bodies is similar to that of the first embodiment of the present invention.
Each of the linear parts of each outer honeycomb fired body is parallel to at least one of the adhesive layer between the outer honeycomb fired body and an adjacent inner honeycomb fired body and the adhesive layer between the outer honeycomb fired body and an adjacent outer honeycomb fired body. The linear part of each outer honeycomb fired body has a length of 5 to 20 mm.
In the outer honeycomb fired body 420 illustrated in Fig. 11(a), the linear part 426 is a part of a peripheral part 420d and is parallel to a facing peripheral part 420b. As illustrated in Fig. 10, the peripheral part 420b of the outer honeycomb fired bodies 420 is attached to the inner honeycomb fired body 410 with an adhesive layer 401B interposed therebetween. Therefore, the linear part 426 of the outer honeycomb fired body 420 is parallel to the adhesive layer between the inner honeycomb fired body and the outer honeycomb fired body.
In the outer honeycomb fired body 430 illustrated in Fig. 11(b), the linear part 436a is a part of a peripheral part 430c and is parallel to a facing peripheral part 430b. The linear part 436b is a part of a peripheral part 430c and is parallel to a facing peripheral part 430a. As illustrated in Fig. 10, the peripheral part 430b of the outer honeycomb fired body 430 is attached to another outer honeycomb fired body 420 with an adhesive layer 401C interposed therebetween. Therefore, the linear part 426 of the outer honeycomb fired body 430 is parallel to the adhesive layer between these outer honeycomb fired bodies.
Although the outer honeycomb fired body 430 illustrated in Fig. 11 (b) includes two linear parts 436a and 436b, the outer honeycomb fired body may be designed to have only one linear part.

In the present embodiment, the structure of the curved parts of the outer honeycomb fired bodies is similar to that of the first embodiment of the present invention.
In the outer honeycomb fired body 420 illustrated in Fig. 11(a), the peripheral wall 424a includes steps formed by a projection 425a and a recess 425b at positions in accordance with the arrangement of the peripheral cells 427a. The cross-section of each of the projections 425a and the recesses 425b has a shape with a chamfered part. Therefore, in the outer honeycomb fired body 420, the chamfered parts, that is, the projections 425a and the recesses 425 correspond to curved parts.
Similarly, in the outer honeycomb fired body 430 illustrated in Fig. 11(b), projections 435a and recesses 435b correspond to curved parts.

The outer honeycomb fired bodies may have a curved part that is like the curved part of the outer honeycomb fired body 130 illustrated in Fig. 6(a) and 6(b) in which the spaces corresponding to the recesses are completely filled. Alternatively, some of the recesses may be filled such that the outer honeycomb fired bodies have steps in a part of the peripheral wall.
In the outer honeycomb fired body 420 illustrated in Fig. 11 (a), the linear part 426 may not be formed in the peripheral part 420d. Even without the linear part, the peripheral parts 420a and 420c are parallel. Therefore, upon combining the outer honeycomb fired bodies 420 to manufacture the honeycomb structured body, the outer honeycomb fired bodies 420 can be held by being sandwiched at the peripheral parts 420a and 420c.

In the present embodiment, each cell of the outer honeycomb fired bodies may have a substantially rectangular (substantially square) cross-section and have the same cross-sectional area like the first and second embodiments of the present invention, or may have shapes such that the cells are categorized into large-volume cells and small-volume cells like the third embodiment of the present invention.

In each of the outer honeycomb fired body 420 illustrated in Fig. 11(a) and the outer honeycomb fired body 430 illustrated in Fig. 11(b), the cross-sectional shape of the peripheral cells that are in contact with the peripheral wall partially constituting the periphery of the ceramic block and the cross-sectional shape of the inner cells are the same. However, in the present embodiment, the peripheral cells that are in contact with the peripheral wall partially constituting the periphery of the ceramic block may include an incomplete cell, like the second embodiment of the present invention.

In the present embodiment, the inner honeycomb fired bodies can be designed to have a configuration similar to that of the first to third embodiments of the present invention in accordance with the configuration of the outer honeycomb fired bodies.

Each of the inner honeycomb fired bodies and the outer honeycomb fired bodies constituting the honeycomb structured body according to the present embodiment may have angled parts in the inner walls of each cell. The angled parts may be chamfered.
For example, in the present embodiment, the angled parts of the cells may be round corners (as if the cells are R-chamfered) or may be straight lines (as if the cells are C-chamfered).

In a method for manufacturing the honeycomb structured body according to the present embodiment, the honeycomb structured body according to the present embodiment can be manufactured in the same manner as that of the first embodiment of the present invention, except that dies having different shapes are used for extrusion-molding to manufacture honeycomb molded bodies having predetermined shapes, and that the inner honeycomb fired bodies and the outer honeycomb fired bodies are arranged at predetermined positions and combined together in the combining step.

In the present embodiment, the effects (1) to (8) described in the first embodiment of the present invention are provided.

### (Fifth Embodiment)

Hereinafter, a fifth embodiment, which is one embodiment of the present invention, is described.
In the present embodiment, the external appearance shape of the inner honeycomb fired bodies is similar to that of the first to fourth embodiments of the present invention, and the external appearance shape of the outer honeycomb fired bodies is different from that of the first to fourth embodiments of the present invention.
In the present embodiment, like the fourth embodiment, honeycomb fired bodies whose cross-section is substantially rectangular (substantially square) are used as inner honeycomb fired bodies, and honeycomb fired bodies of a plurality of predetermined shapes which have different cross-sectional shapes are used as outer honeycomb fired bodies. The combination of honeycomb fired bodies is, however, different from that of the first to fourth embodiments of the present invention.
Specifically, the number of inner honeycomb fired bodies in the honeycomb structured body according to the present embodiment is larger than the numbers of inner honeycomb fired bodies in the honeycomb structured bodies according to the first to fourth embodiments of the present invention.

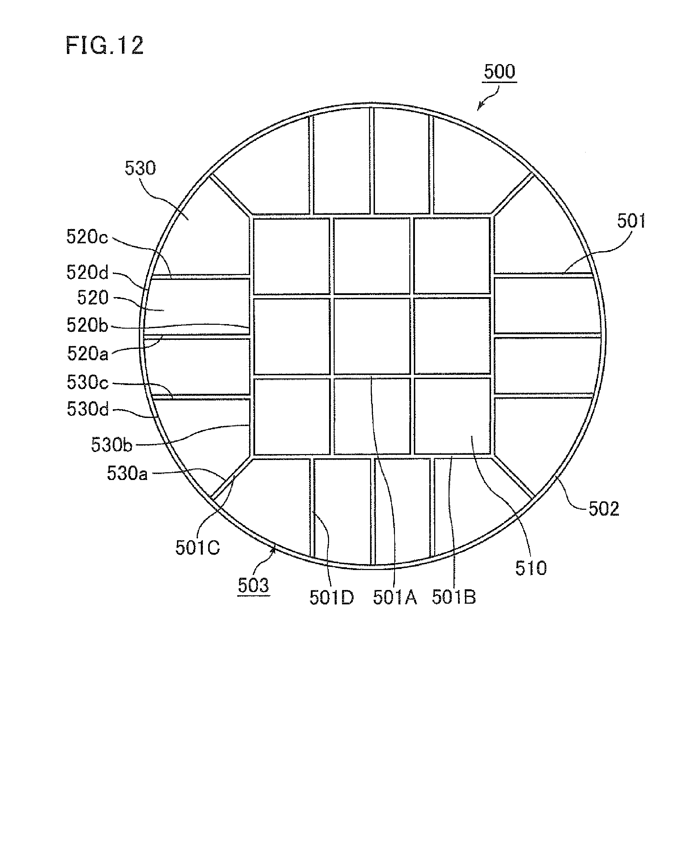

Fig. 12 is a side view schematically illustrating one example of a honeycomb structured body according to a fifth embodiment of the present invention.

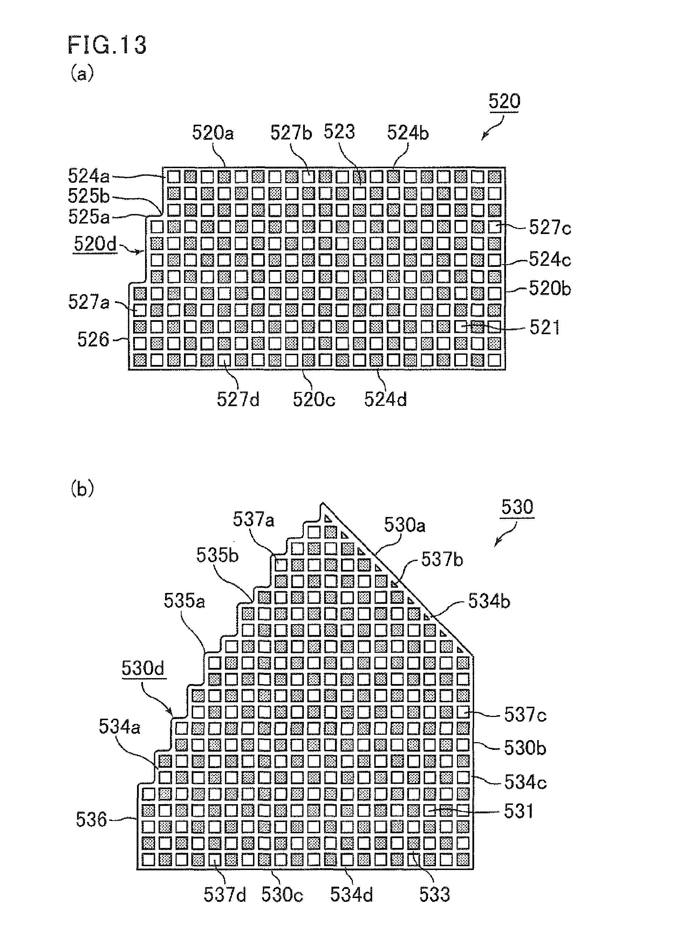

Figs. 13(a) and 13(b) are side views each schematically illustrating one example of an outer honeycomb fired body in the honeycomb structured body according to the fifth embodiment of the present invention.
The shape illustrated in Fig. 13(a) is formed by three line segments and a side formed by the combination of a linear part and steps. The shape illustrated in Fig. 13(b) is a sector shape formed by three line segments and an arc, and the arc is formed by the combination of a linear part and steps.

The honeycomb structured body 500 illustrated in Fig. 12 includes a ceramic block 503 in which eight outer honeycomb fired bodies 520 having a shape as illustrated in Fig. 13(a), eight outer honeycomb fired bodies 530 having a shape as illustrated in Fig. 13(b), and nine inner honeycomb fired bodies 510 located inward thereof are combined together with adhesive layers 501A to 501D interposed therebetween. On the periphery of the ceramic block 503, a coat layer 502 is formed. It should be noted that the formation of a coat layer is optional.

As illustrated in Fig. 12, the cross-section of the inner honeycomb fired bodies 510 is substantially rectangular (substantially square).
As illustrated in Fig. 12, the cross-section of the outer honeycomb fired bodies 520 is formed by three line segments 520a, 520b and 520c, and one substantial arc 520d. The two angles formed by two line segments out of the three line segments (the angle between the line segments 520a and 520b and the angle between the line segments 520b and 520c) are both 90°.
The cross-section of the other outer honeycomb fired bodies 530 is a substantially sectorial unit formed by three line segments 530a, 530b and 530c and one substantial arc 530d. The two angles formed by two line segments out of the three line segments (the angle between the line segments 530b and 530c and the angle between line segments 530a and 530b) are 90° and 135°.
The honeycomb fired bodies 510, 520 and 530 are preferably a porous body made of silicon carbide or silicon-containing silicon carbide.

In the present embodiment as well, each of the outer honeycomb fired bodies includes at least a curved part and a linear part in the part of the periphery of the outer honeycomb fired body which partially constitutes the periphery of the ceramic block in the cross-section perpendicular to the longitudinal direction.
The outer honeycomb fired body 520 illustrated in Fig. 13(a) is an example in which a peripheral part 520d which partially constitutes the periphery of the ceramic block, in the periphery 520a to 520d, includes curved parts 525a and 525b, and a linear part 526 in the cross-section.
The outer honeycomb fired body 530 illustrated in Fig. 13(b) is an example in which a peripheral part 530d which partially constitutes the periphery of the ceramic block, in the periphery 530a to 530d, includes curved parts 535a and 535b, and a linear part 536 in the cross-section.

In the present embodiment, the structure of the linear part of the outer honeycomb fired bodies is similar to that of the first embodiment of the present invention.
The linear part of each outer honeycomb fired body is parallel to at least one of the adhesive layer between the outer honeycomb fired body and an adjacent inner honeycomb fired body and the adhesive layer between the outer honeycomb fired body and an adjacent outer honeycomb fired body. The linear part of each outer honeycomb fired body has a length of 5 to 20 mm.
In the outer honeycomb fired body 520 illustrated in Fig. 13 (a), the linear part 526 is a part of the peripheral part 520d and is parallel to a facing peripheral part 520b. As illustrated in Fig. 12, the peripheral part 520b of the outer honeycomb fired body 520 is attached to an inner honeycomb fired bodies 510 with an adhesive layer 501B interposed therebetween. Therefore, the linear part 526 of the of the outer honeycomb fired bodies 520 is parallel to the adhesive layer between the inner honeycomb fired body and the outer honeycomb fired body.
In the outer honeycomb fired body 530 illustrated in Fig. 13 (b), the linear part 536 is a part of the peripheral part 530d and is parallel to a facing peripheral part 530b. As illustrated in Fig. 12, the peripheral part 530b of the outer honeycomb fired body 530 is attached to an inner honeycomb fired bodies 510 with an adhesive layer 501B interposed therebetween. Therefore, the linear part 536 of the outer honeycomb fired body 530 is parallel to the adhesive layer between the inner honeycomb fired body and the outer honeycomb fired body.

In the present embodiment, the structure of the curved parts of the outer honeycomb fired bodies is similar to that of the first embodiment of the present invention.
In the outer honeycomb fired body 520 illustrated in Fig. 13(a), the peripheral wall 524a includes steps formed by a projection 525a and a recess 525b at positions in accordance with the arrangement of the peripheral cells 527a. The cross-section of each of the projections 525a and the recesses 525b has a shape with a chamfered part. Therefore, in the outer honeycomb fired body 520, the chamfered parts, that is, the projections 525a and the recesses 525b correspond to curved parts.
Similarly, in the outer honeycomb fired body 530 illustrated in Fig. 13 (b), projections 535a and recesses 535b correspond to curved parts.

In the present embodiment, the outer honeycomb fired bodies may have a curved part that is like the curved part of the outer honeycomb fired body 130 illustrated in Fig. 6 (a) and 6(b) in which the spaces corresponding to the recesses are completely filled. Alternatively, some of the recesses may be filled such that the outer honeycomb fired bodies have steps in a part of the peripheral wall.
In the outer honeycomb fired body 520 illustrated in Fig. 13 (a), the linear part 526 may not be formed in the peripheral part 520d. Even without the linear part, the peripheral parts 520a and 520c are parallel. Therefore, upon combining the outer honeycomb fired bodies 520 to manufacture the honeycomb structured body, the outer honeycomb fired bodies 520 can be held by being sandwiched at the peripheral parts 520a and 520c.

In the present embodiment, each cell of the outer honeycomb fired bodies may have a substantially rectangular (substantially square) cross-section and have the same cross-sectional area like the first and second embodiments of the present invention, or may have shapes such that the cells are categorized into large-volume cells and small-volume cells like the third embodiment of the present invention.

In the outer honeycomb fired body 520 illustrated in Fig. 13(a) and the outer honeycomb fired body 530 illustrated in Fig. 13(b), the cross-sectional shape of the peripheral cells that are in contact with the peripheral wall partially constituting the periphery of the ceramic block and the cross-sectional shape of the inner cells are the same. However, in the present embodiment, the peripheral cells that are in contact with the peripheral wall partially constituting the periphery of the ceramic block may include an incomplete cell, like the second embodiment of the present invention.

In the present embodiment, the inner honeycomb fired bodies can be designed to have a configuration similar to that of the first to fourth embodiments of the present invention in accordance with the configuration of the outer honeycomb fired bodies.

Each of the inner honeycomb fired bodies and the outer honeycomb fired bodies constituting the honeycomb structured body according to the present embodiment may have angled parts in the inner walls of each cell. The angled parts may be chamfered.
For example, in the present embodiment, the angled parts of the cells may be round corners (as if the cells are R-chamfered) or may be straight lines (as if the cells are C-chamfered).

In a method for manufacturing the honeycomb structured body according to the present embodiment, the honeycomb structured body according to the present embodiment can be manufactured in the same manner as that of the first embodiment of the present invention, except that dies having different shapes are used for extrusion-molding to manufacture honeycomb molded bodies having predetermined shapes, and that the inner honeycomb fired bodies and the outer honeycomb fired bodies are arranged at predetermined positions and combined together in the combining step.

In the present embodiment, the effects (1) to (8) described in the first embodiment of the present invention are provided.

### (Other Embodiments)

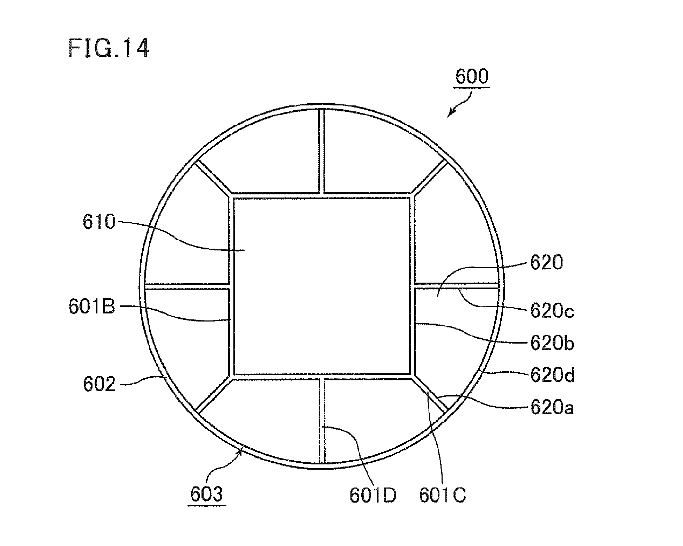

In the honeycomb structured body of the present invention, the number of inner honeycomb fired bodies is not limited to two or more, and may be one.
Specifically, the cross-section of the honeycomb structured body may be the one illustrated in Fig. 14 which includes one inner honeycomb fired body.
Fig. 14 is a side view schematically illustrating one example of a honeycomb structured body according to another embodiment of the present invention.
The configuration of the honeycomb structured body 600 illustrated in Fig. 14 is the same as that of the honeycomb structured body 100 illustrated in Figs. 1 and 2, except that the number of inner honeycomb fired bodies is different.
Specifically, the honeycomb structured body 600 illustrated in Fig. 14 includes one inner honeycomb fired body 610 instead of the four inner honeycomb fired bodies 110 combined together with the adhesive layer 101A interposed therebetween in the honeycomb structured body 100 illustrated in Fig. 2.
Although the cross-sectional area of the inner honeycomb fired body 610 illustrated in Fig. 14 is larger than that of the inner honeycomb fired bodies 110 illustrated in Fig. 2, the function thereof is the same as that of the inner honeycomb fired bodies 110. The outer honeycomb fired bodies 620 illustrated in Fig. 14 are the same as the honeycomb fired bodies 120 in the honeycomb structured body 100 illustrated in Fig. 2.

The inner honeycomb fired body in the honeycomb structured body of the present invention preferably has an area of the cross-section perpendicular to the longitudinal direction in the range of 900 to 2500 mm².
In the case that the cross-sectional area of the inner honeycomb fired body is within the above range, the honeycomb structured body is likely to avoid formation of cracks in the honeycomb fired bodies, which is caused by expansion and shrinkage of the honeycomb fired bodies in response to exposure to a high temperature in a process such as a regeneration treatment of the honeycomb structured body, when used as a honeycomb filter.

In the honeycomb structured body of the present invention, the position of the linear part of each outer honeycomb fired body is not limited to an end portion of the part of the periphery of the outer honeycomb fired body which partially constitutes the periphery of the ceramic block.
In order to be easily held, each outer honeycomb fired body is preferably configured to have a linear part at an end portion of the part of the periphery of the outer honeycomb fired body which partially constitutes the periphery of the ceramic block.

The phrase an "end portion of the part of the periphery of the outer honeycomb fired body which partially constitutes the periphery of the ceramic block" used herein means a portion of the peripheral part at an either end at which the outer honeycomb fired body is in contact with an adjacent outer honeycomb fired body with an adhesive layer interposed therebetween.

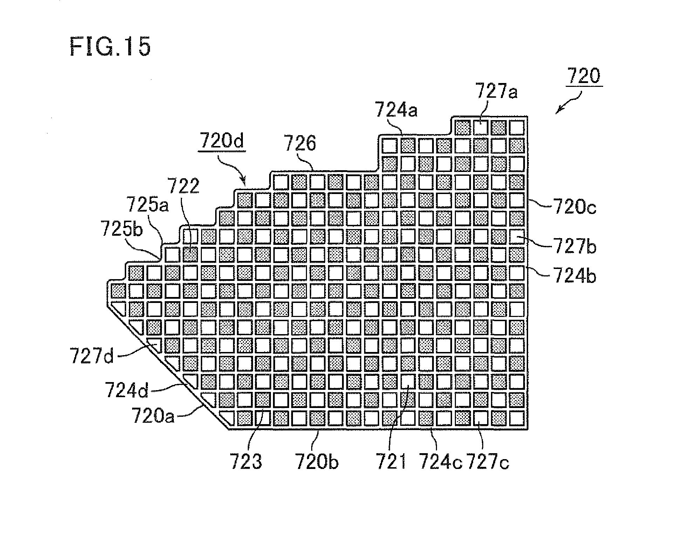

Fig 15 illustrates an example of outer honeycomb fired bodies in which a linear part is not formed in an end portion of a part of the periphery of the outer honeycomb fired body which partially constitutes the periphery of the ceramic block.
Fig. 15 is a side view schematically illustrating one example of an outer honeycomb fired body of the honeycomb structured body according to another embodiment of the present invention.
The outer honeycomb fired body 720 illustrated in Fig. 15 can also be regarded as another example of the outer honeycomb fired bodies in the honeycomb structured body according to the first embodiment (a modified example of the outer honeycomb fired body 120 illustrated in Figs. 4(a) and 4(b).
The outer honeycomb fired body 720 illustrated in Fig. 15 is an example in which a peripheral part 720d which partially constitutes the periphery of the ceramic block, in the periphery 720a to 720d, includes curved parts 725a and 725b, and a linear part 726 in the cross-section.
In the outer honeycomb fired body 720, the linear part 726, which is a part of a peripheral part 720d of the outer honeycomb fired body 720, is parallel to a facing peripheral part 720b. Therefore, the linear part 726 is parallel to the adhesive layer between the outer honeycomb fired body and an adjacent inner honeycomb fired body.
Although the linear part 726 of the outer honeycomb fired body 720 is not located in the end portion of the peripheral part 720d that partially constitutes the periphery of the ceramic block, the outer honeycomb fired body 720 can be held by being sandwiched at the linear part 726 and the peripheral part 720b.
Thus, a linear part formed in a portion other than the end portion of the part of the periphery of the outer honeycomb fired bodies which partially constitutes the periphery of the ceramic block will also function as the "linear part" of the outer honeycomb fired bodies defined in the present invention.

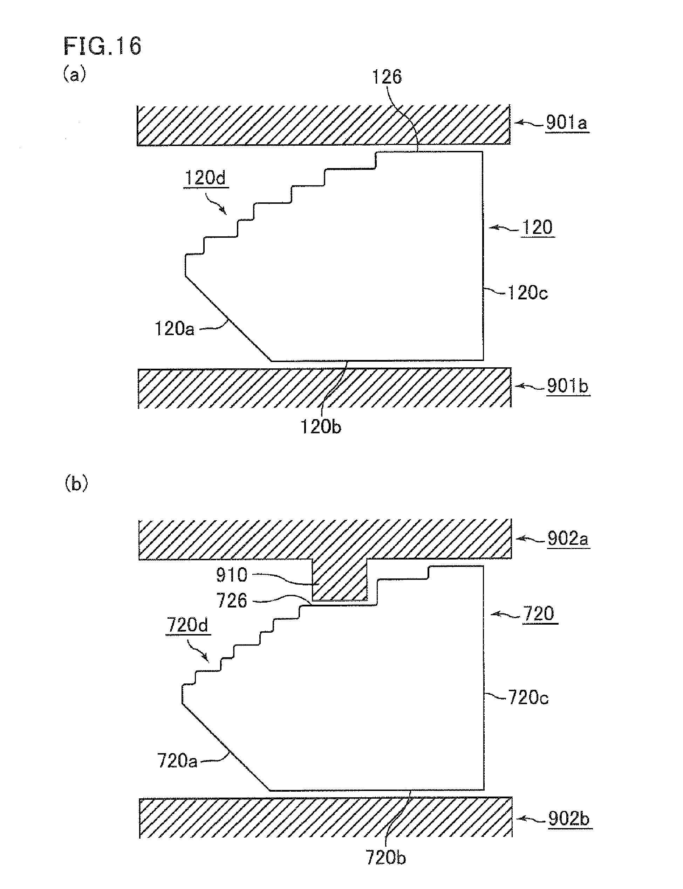

Figs. 16(a) and 16(b) are side views each schematically illustrating one example of a method for holding an outer honeycomb fired body in a honeycomb structured body according to an embodiment of the present invention.
Fig. 16(a) illustrates a method for holding the outer honeycomb fired body 120 illustrated in Figs. 4(a) and 4(b), and Fig. 16(b) illustrates a method for holding the outer honeycomb fired body 720 illustrated in Fig. 15.
When, as illustrated in Fig. 16(a), the linear part 126 of the outer honeycomb fired body 120 is located in the end portion of the peripheral part 120d which partially constitutes the periphery of the ceramic block, in the periphery 120a to 120d of the outer honeycomb fired body 120, the outer honeycomb fired body 120 can be held in a state of being sandwiched at the linear part 126 and the facing peripheral part 120b of the outer honeycomb fired body 120 between holding units 901a and 901b.
When, as illustrated in Fig. 16(b), the linear part 726 of the outer honeycomb fired body 720 is located in a portion other than the end portion of the peripheral part 720d which partially constitutes the periphery of the ceramic block, in the periphery 720a to 720d of the outer honeycomb fired body 720, the outer honeycomb fired body 720 can be held in a state of being sandwiched at the linear part 726 and the facing peripheral part 720b of the outer honeycomb fired body 720 between holding units 902a and 902b. In the honeycomb structured body of the present invention, the holding unit 902a preferably has a projection 910 so that the outer honeycomb fired body 720 can be sandwiched at the linear part 726.
In Figs. 16(a) and 16(b), the holding units 901a, 901b, and 902b may or may not have a projection.

In the honeycomb structured body of the present invention, at least one outer honeycomb fired body includes at least one linear part in the part which partially constitutes the periphery of the ceramic block, in the periphery of the outer honeycomb fired body.

In the honeycomb structured body of the present invention, the linear part of each of the at least one of the outer honeycomb fired bodies is preferably formed by a part of the peripheral wall, the part being in contact with 5 to 10 adjacent cells.

In the present invention, the outer honeycomb fired bodies may have any shape, provided that at least one of the outer honeycomb fired bodies includes at least a curved part and a linear part in the part of the periphery of the at least one outer honeycomb fired body which partially constitutes the periphery of the ceramic block in the cross-section perpendicular to the longitudinal direction, that the linear part of each of the at least one of the outer honeycomb fired bodies is parallel to at least one of the adhesive layer between the outer honeycomb fired body and an adjacent inner honeycomb fired body, and the adhesive layer between the outer honeycomb fired body and an adjacent outer honeycomb fired body, and that the linear part of each of the at least one of the outer honeycomb fired bodies has a length of 5 to 20 mm.

When, in the honeycomb structured body of the present invention, the complete cells include large-volume cells and small-volume cells, the shapes of the large-volume cells and the small-volume cells are not limited to those described in the above embodiments.

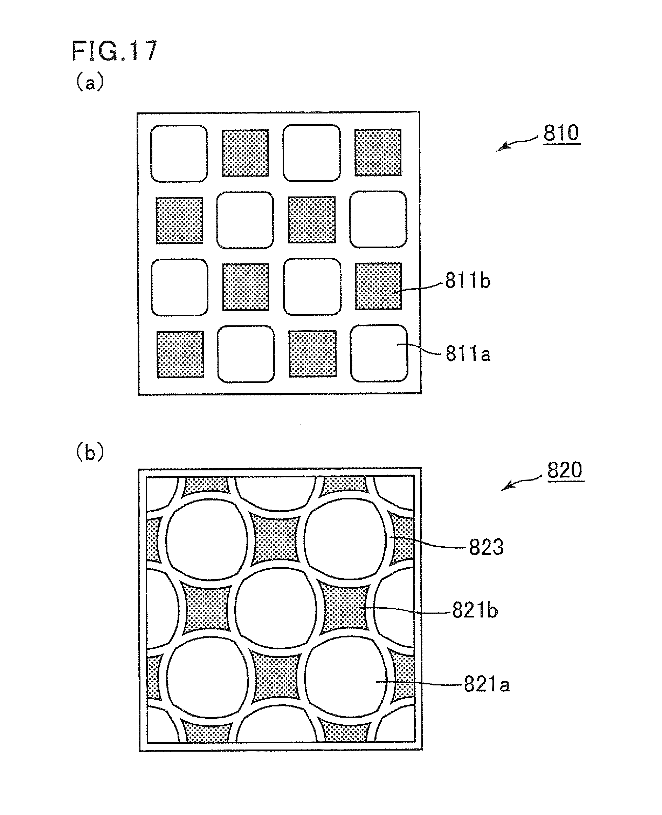

Figs. 17 (a) and 17 (b) are side views each schematically illustrating one example of an end face of an inner honeycomb fired body in a honeycomb structured body according to a still another embodiment of the present invention.
These figures each illustrate one end face of an inner honeycomb fired body in which the small-volume cells are sealed.
Referring to Figs. 17(a) and 17(b), the cross-sectional shapes of the large-volume cells and the small-volume cells in other embodiments are described.

In the inner honeycomb fired body 810 illustrated in Fig. 17(a), the cross-section of each large-volume cell 811a perpendicular to the longitudinal direction is substantially rectangular and has round corners corresponding to the angled parts, and the cross-section of each small-volume cell 811b perpendicular to the longitudinal direction is substantially rectangular.

In the inner honeycomb fired body 820 illustrated in Fig. 17(b), all sides of the cross-section of each large-volume cell 821a perpendicular to the longitudinal direction are curved, and all sides of the cross-section of the small-volume cell 821b perpendicular to the longitudinal direction are curved.
Accordingly, in Fig. 17(b), the solid lines defining the cross-sectional shape of the cell walls 823 are all curved.
Each large-volume cell 821a has a cross-section in which the cell walls 823 project from the center toward the outside of the cross-section of the cell, and each small-volume cell 821b has a cross-section in which the cell walls 823 project from the outside toward the center of the cross-section of the cell.
The cross-sectional shape of the cell walls 823 is a "wave" form with peaks along the horizontal and perpendicular directions of the cross-section of the inner honeycomb fired body. When adjacent peaks of the cell walls 823 in each small-volume cell (local maximums of the amplitude of the wave form when the wave form is considered as a sine curve) are closer to each other, the cross-section of the large-volume cells 821a is extended outwardly, and the cross-section of the small-volume cells 821b is recessed inwardly. The amplitude of the wave form may be constant or varied but is preferably constant.

The cross-section of the outer honeycomb fired bodies may also be like that of Fig. 17(a) or 17(b) that includes large-volume cells and small-volume cells. When the peripheral cells of each outer honeycomb fired body include incomplete cell(s), the cross-sectional shape of peripheral cells except the incomplete cell(s) and the cross-sectional shape of the inner cells may be like the cross-sectional shapes of the large-volume cells and the small-volume cells illustrated in Fig. 17(a) or 17(b).

In the honeycomb structured body of the present invention, the peripheral walls of each outer honeycomb fired body may be as thick as the cell walls of the outer honeycomb fired bodies, the peripheral walls of the inner honeycomb fired bodies, and the cell walls of the inner honeycomb fired bodies, or may be thicker than these.
When the peripheral walls of each outer honeycomb fired body (the peripheral wall of the honeycomb structured body) are thicker than the cell walls of the outer honeycomb fired bodies, the peripheral walls of the inner honeycomb fired bodies, and the cell walls of the inner honeycomb fired bodies, the peripheral walls of the outer honeycomb fired body are preferably 1.3 to 3.0 times thicker than these.

The shape of the honeycomb structured body of the present invention is not particularly limited to the substantially round pillar shape, and may be any desired pillar shape such as a substantially cylindroid shape and a substantially polygonal pillar shape.

In the honeycomb structured body of the present invention, the ends of the cells may not be sealed. In this case, the honeycomb structured body can be used as a catalyst carrier.

In the case that the honeycomb structured body of the present invention is used as a filter, the porosity of the honeycomb fired bodies in the honeycomb structured body is not particularly limited, and is preferably 35 to 60%.
If the porosity of the honeycomb fired bodies is less than 35%, the honeycomb fired bodies are easily clogged. If the porosity of the honeycomb fired bodies is more than 60%, the strength of the honeycomb fired bodies is low and therefore the honeycomb fired bodies are easily broken.

In the case that the honeycomb structured body of the present invention is used as a filter, the average pore diameter of the honeycomb fired bodies in the honeycomb structured body is preferably 5 to 30 µm.
If the average pore diameter of the honeycomb fired bodies is less than 5 µm, the honeycomb fired bodies are easily clogged. If the average pore diameter of the honeycomb fired bodies is more than 30 µm, particulates pass through the pores of the honeycomb fired bodies. In this case, the honeycomb fired bodies fail to capture particulates, and hence the honeycomb structured body cannot function as a filter.

The above-mentioned porosity and pore diameter can be measured by a known mercury porosimetry method.

In the present invention, the cell density in the cross-section of the honeycomb fired bodies is not particularly limited. The preferable lower limit thereof is 31.0 pcs/cm² (200 pcs/inch²), the preferable upper limit thereof is 93.0 pcs/cm² (600 pcs/inch²), and the more preferable lower limit is 38.8 pcs/cm² (250 pcs/inch²) and the more preferable upper limit is 77.5 pcs/cm² (500 pcs/inch²) .
In the present embodiment, the thickness of the cell walls of the honeycomb fired bodies is not particularly limited and is preferably 0.1 to 0.4 mm.

In the honeycomb structured body of the present invention, the shape of the cross-section of the cells of the honeycomb fired bodies perpendicular to the longitudinal direction is not particularly limited, and may be any shape such as a substantially circular shape, a substantially elliptical shape, a substantially rectangular shape, a substantially pentagonal shape, a substantially hexagonal shape, a substantially trapezoidal shape, and a substantially octagonal shape. Various shapes may coexist.

The main component of the material of the honeycomb fired bodies in the honeycomb structured body of the present invention is not limited to silicon carbide or silicon-containing silicon carbide, and may be other ceramic materials. Examples of the other ceramic materials include powders of nitride ceramics such as aluminum nitride, silicon nitride, boron nitride, and titanium nitride; powders of carbide ceramics such as zirconium carbide, titanium carbide, tantalum carbide, and tungsten carbide; powders of oxide ceramics such as cordierite and aluminum titanate; and other ceramic powders.

The organic binder contained in the wet mixture used for manufacturing honeycomb fired bodies in the honeycomb structured body of the present invention is not particularly limited, and examples thereof include methylcellulose, carboxymethylcellulose, hydroxyethylcellulose, polyethylene glycol, and the like. Methylcellulose is preferable among these. The desirable blending amount of the organic binder is typically 1 to 10 parts by weight per 100 parts by weight of the ceramic powder.

The plasticizer in the above wet mixture is not particularly limited, and examples thereof include glycerin and the like.
Also, the lubricant in the above wet mixture is not particularly limited, and examples thereof include polyoxyalkylene compounds such as polyoxyethylene alkyl ethers and polyoxypropylene alkyl ethers, and the like.
Specific examples of the lubricant include polyoxyethylene monobutyl ether, polyoxypropylene monobutyl ether, and the like.
The above wet mixture may not contain any plasticizers and lubricants in some cases.

For preparation of the above wet mixture, a dispersant solution may be used. Examples of the dispersant solution include water, organic solvents such as benzene, alcohols such as methanol, and the like.
Furthermore, a molding aid may be added to the above wet mixture.
The molding aid is not particularly limited, and examples thereof include ethylene glycol, dextrin, fatty acids, fatty acid soaps, polyalcohols, and the like.

Furthermore, a pore-forming agent such as balloons that are fine hollow spheres including oxide-based ceramics, spherical acrylic particles, and graphite may be added to the above wet mixture, if necessary.
The balloons are not particularly limited, and examples of the balloons include alumina balloons, glass micro-balloons, shirasu balloons, fly ash balloons (FA balloons), mullite balloons, and the like. Among these, alumina balloons are more desirably used.

Examples of the inorganic binder in the above adhesive paste and the above coating material paste include silica sol, alumina sol, and the like. Each of these may be used alone, or two or more of these may be used in combination. Among the inorganic binders, silica sol is preferable.

Examples of the inorganic particles in the above adhesive paste and the above coating material paste include carbide particles, nitride particles, and the like. Specific examples thereof include silicon carbide particles, silicon nitride particles, boron nitride particles, and the like. Each of these may be used alone, or two or more of these may be used in combination. Among these inorganic particles, silicon carbide particles are preferable because of their superior thermal conductivity.

Examples of the inorganic fiber and/or whisker in the above adhesive paste and the above coating material paste include inorganic fibers and/or whiskers made from silica-alumina, mullite, alumina, silica, and the like. Each of these may be used alone, or two or more of these may be used in combination. Among these inorganic fibers, alumina fibers are preferable. The inorganic fiber may be biosoluble.

A catalyst for converting exhaust gas may be supported on the honeycomb structured body of the present invention. Examples of the catalyst to be supported include noble metals such as platinum, palladium, and rhodium. Other examples of the catalyst include alkali metals such as potassium and sodium; and alkaline earth metals such as barium. Each of these catalysts may be used alone, or two or more of these may be used in combination.

The combining step in the manufacturing process of the honeycomb structured body of the present invention may be carried out, for example, by a method in which the honeycomb fired bodies are temporarily fixed in a frame having a substantially same shape as that of a ceramic block (or an aggregated body of the honeycomb fired bodies) to be formed, and the adhesive paste is injected to space between the honeycomb fired bodies, instead of the method in which the adhesive paste is applied to the side faces of each of the honeycomb fired bodies.

### EXPLANATION OF SYMBOLS

100, 400, 500, 600: Honeycomb structured body
101, 101A to 101D, 401A to 401D, 501, 501A to 501D, 601A to 601D: Adhesive layer
102, 402, 502, 602: Coat layer
103, 403, 503, 603: Ceramic block
110, 120, 130, 220, 310, 320, 330, 340, 410, 420, 430, 510, 520, 530, 610, 620, 720, 810, 820, 1110, 1120: Honeycomb fired body 111, 121, 121a to 121c, 127a to 127d, 131, 137a to 137d,
221, 227a to 227e, 311a, 311b, 321a, 321b,
327a to 327e, 331a, 331b, 341a, 341b, 347a to 347e,
421, 427a to 427d, 431, 437a to 437c, 521, 527a to 527d, 531, 537a to 537d, 721, 727a to 727d, 811a, 811b, 821a, 821b, 1111, 1112, 1121, 1122: Cell
113, 123, 123a, 123b, 133, 223, 313, 323, 333, 343, 423, 433, 523, 533, 723, 823, 1113, 1123: Cell wall
114a to 114d, 124a to 124d, 134a to 134d, 224a to 224d, 314a to 314d, 324a to 324d, 334a to 334d, 344a to 344d, 424a to 424d, 434a to 434c, 524a to 524d, 534a to 534d, 724a to 724d, 1114, 1115, 1124, 1125: Peripheral wall
120a to 120d, 130a to 130d, 220a to 220d, 320a to 320d, 340a to 340d, 420a to 420d, 430a to 430c, 520a to 520d, 530a to 530d, 620a to 620d, 720a to 720d: Periphery (periphery of outer honeycomb fired body)
125a, 125b, 135, 225a, 225b, 325a, 325b, 345a, 345b, 425a, 425b, 435a, 435b, 525a, 525b, 535a, 535b, 725a, 725b: Curved part of outer honeycomb fired body
126, 136, 226, 326, 346, 426, 436a, 436b, 526, 536, 726: Linear part of outer honeycomb fired body

## Claims

1. A honeycomb structured body comprising:
a ceramic block formed by combining a plurality of honeycomb fired bodies with an adhesive layer interposed between, said honeycomb fired bodies each having a large number of cells and defined by peripheral walls, said cells longitudinally placed in parallel with one another with a cell wall therebetween,
wherein
said honeycomb fired bodies of said ceramic block have different shapes,
said honeycomb fired bodies include outer honeycomb fired bodies located in a peripheral part of said ceramic block and at least one inner honeycomb fired body located inward of said outer honeycomb fired bodies,
at least one of said outer honeycomb fired bodies includes at least a curved part and a linear part in a part of a periphery which partially constitutes a periphery of said ceramic block, in a cross-section of said at least one of said outer honeycomb fired bodies perpendicular to said longitudinal direction,
the linear part of each of said at least one of said outer honeycomb fired bodies is parallel to at least one of the adhesive layer between the outer honeycomb fired body and an adjacent inner honeycomb fired body, and the adhesive layer between the outer honeycomb fired body and an adjacent outer honeycomb fired body, and
the linear part of each of said at least one of said outer honeycomb fired bodies has a length of 5 to 20 mm.

2. The honeycomb structured body according to claim 1,
wherein
the linear part of each of said at least one of said outer honeycomb fired bodies is formed by a part of a peripheral wall, said part being in contact with 5 to 10 adjacent cells.

3. The honeycomb structured body according to claim 1 or 2,
wherein
the linear part of each of said at least one of said outer honeycomb fired bodies is located in an end portion of the part of the periphery of the outer honeycomb fired body which partially constitutes the periphery of said ceramic block.

4. The honeycomb structured body according to any one of claims 1 to 3,
wherein
the cells of each of said outer honeycomb fired bodies include peripheral cells in contact with any of the peripheral walls of the outer honeycomb fired body, and inner cells located inward of said peripheral cells,
said inner cells are complete cells formed in accordance with a basic formation pattern, and
each of peripheral cells that are in contact with the peripheral wall partially constituting the periphery of said ceramic block, among said peripheral cells, has a same shape as that of said inner cells in a cross-section perpendicular to said longitudinal direction.

5. The honeycomb structured body according to any one of claims 1 to 3,
wherein
the cells of each of said outer honeycomb fired bodies include peripheral cells in contact with any of the peripheral walls of the outer honeycomb fired body, and inner cells located inward of said peripheral cells,
said inner cells are complete cells formed in accordance with a basic formation pattern, and
peripheral cells that are in contact with the peripheral wall partially constituting the periphery of said ceramic block, among said peripheral cells, include an incomplete cell that has a different shape from that of said inner cells in a cross-section perpendicular to said longitudinal direction.

6. The honeycomb structured body according to claim 5,
wherein
each of peripheral cells of said outer honeycomb fired bodies except the incomplete cell, the inner cells of said outer honeycomb fired bodies, and the cells of said inner honeycomb fired body is substantially quadrangular in a cross-section perpendicular to said longitudinal direction.

7. The honeycomb structured body according to claim 5 or 6,
wherein
the peripheral cells of each of said outer honeycomb fired bodies except the incomplete cell, said inner cells of each of said outer honeycomb fired bodies, and the cells of said inner honeycomb fired body each include large-volume cells and small-volume cells, and
a cross-sectional area of said large-volume cells perpendicular to said longitudinal direction is larger than a cross-sectional area of said small-volume cells perpendicular to said longitudinal direction.

8. The honeycomb structured body according to claim 7,
wherein
the cross-section of each of said large-volume cells perpendicular to said longitudinal direction is substantially quadrangular, and
the cross-section of each of said small-volume cells perpendicular to said longitudinal direction is substantially quadrangular.

9. The honeycomb structured body according to claim 7,
wherein
the cross-section of each of said large-volume cells perpendicular to said longitudinal direction is substantially octagonal, and
the cross-section of each of said small-volume cells perpendicular to said longitudinal direction is substantially quadrangular.

10. The honeycomb structured body according to claim 7,
wherein
all sides of the cross-section of each of said large-volume cells perpendicular to said longitudinal direction are curved, and
all sides of the cross-section of each of said small-volume cells perpendicular to said longitudinal direction are curved.

11. The honeycomb structured body according to any one of claims 1 to 10,
wherein
the peripheral walls of said outer honeycomb fired bodies are thicker than the cell walls of said outer honeycomb fired bodies, the peripheral walls of said inner honeycomb fired body, and the cell walls of said inner honeycomb fired body.

12. The honeycomb structured body according to any one of claims 1 to 11,
wherein
at least one of said outer honeycomb fired bodies includes an angled part in the periphery, and
the peripheral walls of said outer honeycomb fired bodies have a substantially uniform thickness except said angled part.

13. The honeycomb structured body according to any one of claims 1 to 12,
wherein
the cross-section of each of said outer honeycomb fired bodies perpendicular to said longitudinal direction has a substantially sector shape formed by three line segments and the part of the periphery which partially constitutes the periphery of said ceramic block, and
the cross-section of said inner honeycomb fired body perpendicular to said longitudinal direction is substantially quadrangular.

14. The honeycomb structured body according to any one of claims 1 to 13,
wherein
the cells of said outer honeycomb fired bodies and said inner honeycomb fired body are sealed at either one end such that the sealed ends are alternately arranged.

15. The honeycomb structured body according to any one of claims 1 to 14,
wherein
a coat layer is formed on the periphery of said ceramic block.
